# EUROPEAN PATENT SPECIFICATION

(11) **EP 0 934 149 B1**
(45) Date of publication and mention of the grant of the patent: **07.05.2003**
(21) Application number: 97909752.4
(22) Date of filing: 22.10.1997
(51) Int. Cl.: B29C 45/26, B29C 45/33, E03F 5/02, B29C 45/64, B29C 45/03

(54) **MOULD CLOSING SYSTEM, METHOD AND MOULD SYSTEM FOR PRODUCING LARGE INJECTION MOULDED ARTICLES WITH APPLICATION OF VERY HIGH CLOSING PRESSURES AS WELL AS SO EQUIPPED INJECTION MOULDING MACHINE**
FORMSCHLIESSVORRICHTUNG, VERFAHREN UND FORMSYSTEM ZUR HERSTELLUNG VON GROSSEN SPRITZGEGOSSEN GEGENSTÄNDEN UNTER VERWENDUNG VON SEHR GROSSEN SCHLIESSKRÄFTEN SOWIE SO AUSGESTATTETE SPRITZGIESSMASCHINE
SYSTEME DE FERMETURE DE MOULE, PROCEDE ET SYSTEME DE MOULE POUR PRODUIRE DES ARTICLES DE GRANDE DIMENSION MOULES PAR INJECTION AVEC APPLICATION DE PRESSIONS DE FERMETURE TRES ELEVEES, AINSI QUE MACHINE DE MOULAGE PAR INJECTION AINSI EQUIPEE

(30) Priority: 22.10.1996 NL 1004331; 12.11.1996 NL 1004509
(43) Date of publication of application: 11.08.1999
(73) Proprietor: Foma B.V., 8938 AC Leeuwarden (NL)
(72) Inventor: KUIPERS, Sytze, Arnold, NL-8801 PA Franeker (NL)
(74) Representative: Merkelbach, B.
(86) International application number: NL9700586
(87) International publication number: WO98017458

(56) References cited:
- DE-A- 2 134 627
- FR-A- 1 147 301
- FR-A- 1 254 950
- FR-A- 1 406 612
- FR-A- 2 191 982
- GB-A- 2 046 811
- NL-C- 1 001 813
- PATENT ABSTRACTS OF JAPAN vol. 96, no. 7, 31 July 1996 & JP 08 066950 A (SONY CORP), 12 March 1996,

## Description

Mould closing system, method and mould system for producing large injection moulded articles with application of very high closing pressures as well as so equipped injection moulding machine.

The invention relates amongst others to a mould clamping device operating under extremely high clamping forces from 500 tons up and which is adapted for injection moulding of injection moulded products having relatively voluminous dimensions which are movable from the mould in several diverging directions. The invention provides also for a new method, which application allows to make such products which are otherwise difficult to be moved because of their shape. Furthermore, the invention provides for a bed plate, a mould support block and guiding means to be applicable in such a mould clamping device, as well as in a multipartite moulding system, more specifically e.g. for making so called manhole bottoms with connecting sleeves.

While applying low-quality, e.g. recycled, synthetic material, the technology of injection moulding is preferred and for voluminous products, such as manhole bottoms, low-pressure moulding technology is particularly appropriate.
Injection moulding moulds for voluminous products, such as manhole bottoms are, however, very expensive. An additional problem is that manhole bottoms have to be made in many different shapes. For each diameter and connecting angle of the piping connections to the manhole bottom, a specific manhole bottom has to be made with connecting sleeves having the correct diameter and the correct angle of intersection. This means that as many moulds are needed as there are alternative manhole bottoms required. Particularly those versions which are seldom used would become impossibly expensive.

Mould closing systems, such as disclosed by the French patent specification 1.147.301. are well known. However. contrary to the objective of the invention these systems as indicated are developed for the production of small elements at low pressure.

Till now no useful mould clamping devices or moulding systems are available to manufacture plastic injection moulded products of large to extremely large dimensions, like e.g. for the manhole bottoms referred to or for furniture, shopping trolleys, logistic means (boxes, pallets), flower tubs, and the like, of greater dimensions than 1/2 meter or more, or for tube-shaped products with a very large diameter such as septic tanks, or for a great variety of manhole bottoms to be used in plastic sewer systems. Particularly for these injection moulded products the disadvantage is that a number of connecting branches is required with ribs for the discharge and supply through pipes, which are to be placed under different intersecting angles or angle positions, which leads to big and almost unsolvable problems in moving such voluminous moulded products.
Besides, in the manufacturing of such voluminous injection moulded products, e.g. [parts of] telephone booths or [parts of] thick-walled plastic containers for chemical process equipment, it is technically necessary to possess various and very expensive hydraulic or pneumatic means by which extremely high pressures can not only be generated, but also are maintainable during and after the injection moulding process, since otherwise the finished product would not be of high-quality.

It appeared nearly impossible to make such a product of relatively unprecedented dimensions and quality by means of injection moulding at a more or less acceptable price by using existing mould clamping devices for injection moulding machines. This is mainly the reason that high quality injection moulded products of large dimensions cannot now be manufactured and the solution was sought in manufacturing the product out of smaller modules which just are possible to make.
In manufacturing extremely voluminous moulded products in one piece, hand-made moulded products are used applying the lay-up method.

The consequence of the aforementioned disadvantages is that e.g. the earlier mentioned septic tanks can be moulded in concrete only on the building site, or it has to be delivered in smaller dimensions as a concrete product, as in the case of concrete manhole bottoms.

In brief, the costs for injection moulding of such voluminous plastic objects or their manufacturing by the hand method, cannot be realized with the available technical means, despite the undeniable advantages of a high-quality plastic product. ²

The new mould clamping device according to the present invention however allows to remove all aforementioned disadvantages. According to this new method and applying the mould clamping device it becomes possible to manufacture self-removable products or products of large dimensions are movable in more different directions. The great advantage is that now in a very well-thought way, the extremely high clamping forces required to be generated during the injection moulding process and the acting high clamping forces respectively can be achieved and absorbed.

The principle of the invention is based on the new application of commonly used controlling means and relatively low pressure means like those which are commonly used in the injection moulding method, in combination with an effective locking method for a number of separate mould sections. All this without the necessity to generate extremely high mould clamping forces for locking the mould and than keeping it locked during the injection moulding process and thereafter, using highly expensive hydraulicly and/or pneumaticly operated pressure-equipment as defined by the main-claim.

Furthermore, the invention provides a moulding system which allows the manufacturing of complex moulding parts while using a multipartite outer mould, which are self-removable, thereby applying a number of inner moulding parts in order to solve the problems of the different angle positions of the connecting sleeves and/or the positioning thereof in a manhole bottom or the like. By this solution, the invention provides amongst others for the manufacturing of any desired variety of manhole bottoms.
By the application of lateral sections, assembled from a base portion and an exchangeable portion, the exchangeable portion determining the presence or absence of a connecting sleeve in a manhole bottom and the diameter thereof, the costs for the mould can be kept within acceptable limits.

According to the invention, effective use is made in the mould clamping device of a mechanical locking principle, i.e. on the mould, which is locked while applying normal clamping forces, only mechanical locking forces are operating which are achieved by a mechanical locking operation, the maintenance of which, by exerting extremely high clamping forces, does not require hydraulic and/or pneumatic pressure anymore.

Further particulars of the mould clamping device and the method operating such a device will follow hereinafter in the description below and in connection with the claims concerned .

The invention will be illustrated by means of the drawings and some embodiments.
Fig. 1 shows, partly in perspective view and partly in a cross sectional view of both bed plates, the mechanical locking principle of the core of the mould clamping device, the assembled mould being in an open position;
Fig. 2 shows the mould clamping device according to Fig. 1, in closed position, whereby an assembled mould is locked in between two bed plates and several mould support blocks;
Fig. 3 schematically shows the bed plates and mould support blocks shown in Fig. 1 and 2 in open position, of an injection moulding machine in which the mould clamping device according to Fig. 1 is integrated;
Fig. 4 shows the position of the mould clamping device of the injection moulding machine which is further closed in the direction of arrows II-II in Figure 3;
Fig. 5 shows the final position of the mould clamping device which is. completely closed in the direction of arrows I-I in Fig. 4 in the position shown;
Fig. 6 schematically shows a top view of the horizontal arrangement of a number of machine guiding means in an injection moulding machine according to Figs. 3-5;
Fig. 7 shows more in detail, partly in a front view and partly in a cross sectional view an embodiment for locking a bed plate in relation to a guiding means;
Fig. 8 shows, partly in a perspective view and a cross sectional view respectively the open position of a clamping means locking a guiding means;
Fig. 9 shows, partly in a perspective view respectively in a cross sectional view respectively, the locked position of the same clamping means as shown in Fig. 8;
Fig. 10 shows the relative position of the two cooperating bed plates of the mould clamping device as well as the position of the wedge surfaces;
Fig. 11 shows a top view of the top bed plate in Fig. 10;
Fig. 12 shows partly in front view and partly in cross section an insert opening of a bed plate and its corresponding wedge surface as well as of the counter wedge surface cooperating therewith, which is positioned at an auxiliary means attached onto the mould support block;
Fig. 13 very schematically shows a mould clamping device according to Figs. 1 and 2, now however integrated in a horizontal arrangement. For a better understanding the different machine parts are shown far apart;
Fig. 14 shows a lateral view of an injection moulding machine in which the mould clamping device according to Fig. 13 is integrated;
Fig. 15 is a lateral view of the central console and the mould support blocks of the injection moulding machine according to Fig. 14;
Fig. 16 is an end front view of the position of the guiding means which fix the bed plates in between mechanically by means of clamping means;
Fig. 17 shows a perspective top view of a manhole bottom part in which three connecting pipes are intersecting the cylindrical bottom wall;
Fig. 18 shows a horizontal cross sectional view of a moulding system of which the outer mould consists of three separate parts;
Fig. 19 shows a vertical cross sectional view of an also difficultly removable tube-shaped moulding product;
Fig. 20 shows a cross section of a non removable moulding product;
Fig. 21 shows several embodiments A-F of difficultly removable connecting pipes in manhole bottoms;
Fig. 22 shows a front view of a lateral part's section;
Fig. 23 schematically shows a horizontal cross sectional view of an outer mould consisting of several lateral part sections;
Fig. 24 is a diagram and shows the angular division of the outer mould according to Fig. 23;
Fig. 25 shows a top view of an outer mould part according to Fig. 22;
Fig. 26 shows a front view of the exchangeable part which determines the fin-shape of a connecting sleeve, having a diameter which is smaller than the maximum diameter;
Fig. 27 shows a perspective view of a schematically shown different outer mould; and
Fig. 28 shows a diagram with a different angular division of the outer mould parts in Figs. 23 and 24.

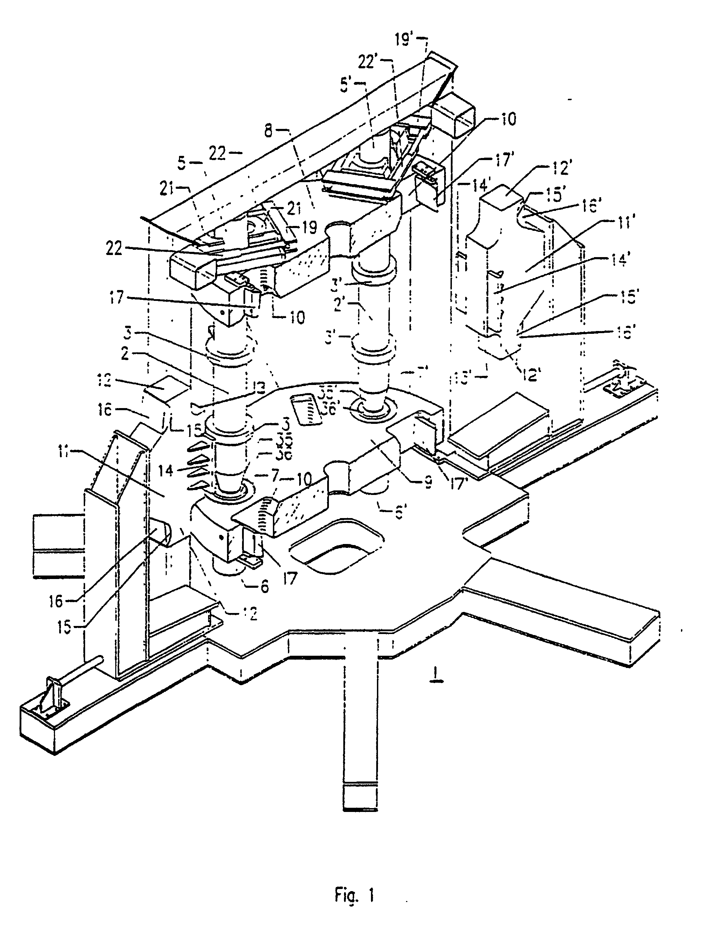

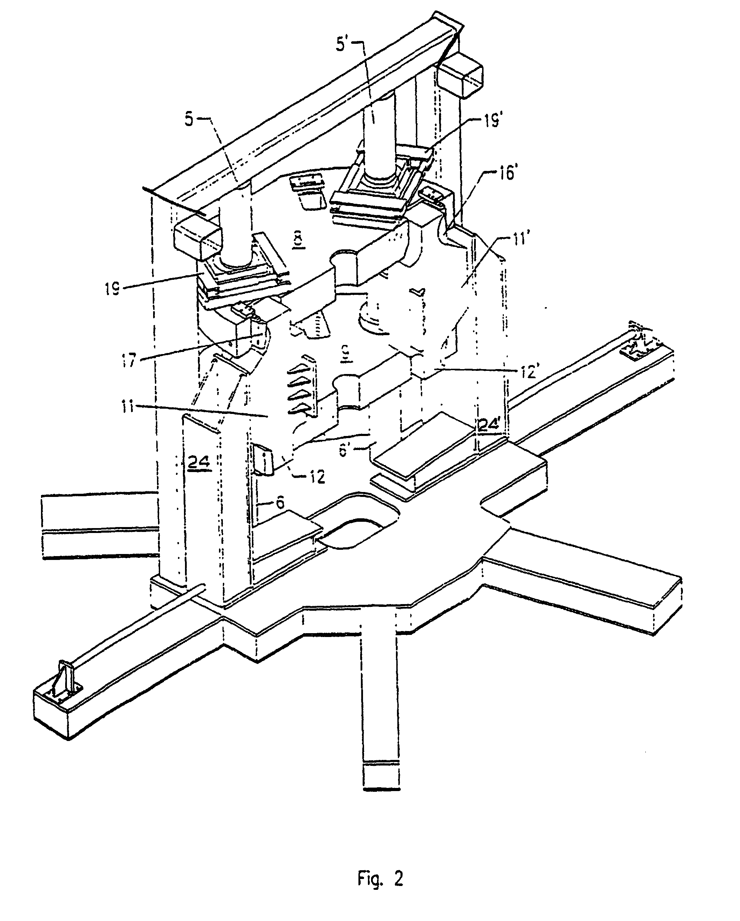

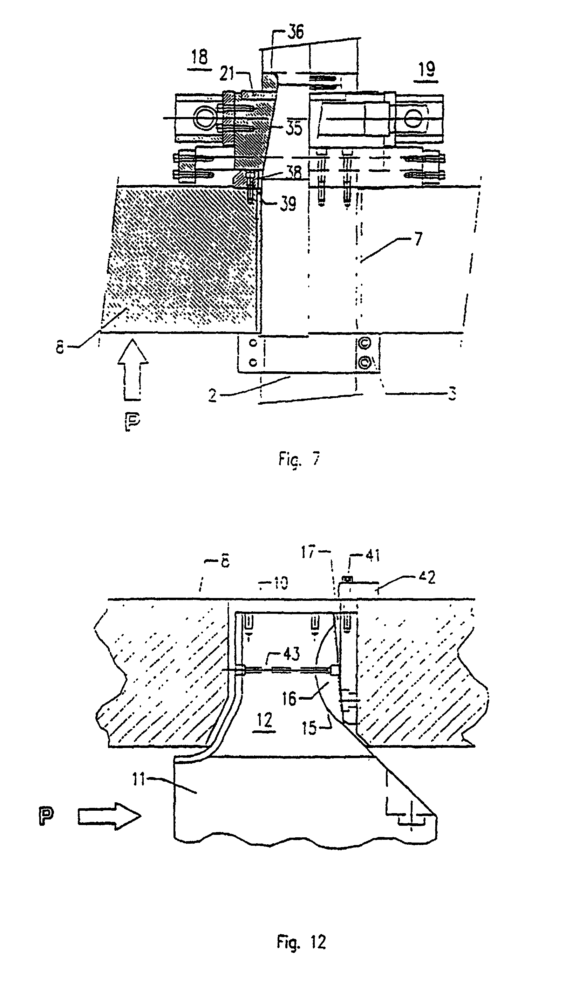

In Figures 1 and 2 a mould clamping device 1 is shown with the main elements required for opening and closing respectively the mould. In its arrangement a number of elongated [column-shaped] guiding means 2 and 2' is provided with a number of fixed rings 3 and 3' which are placed at a mutual distance L. These rings 3 and 3' are each performed by two ring halves (Fig. 7) which are kept in a closed position by fixing means to form a ring. Both extremities 5, 5' and 6, 6' of the guiding means 2, 2' are inserted into correspondingly formed guiding openings 7, 7' and into the relatively stiff bed plates 8 and 9. The diameter of a guiding opening 7, 7' is calculated in such way that the bed plates 8 and 9 in their position according to Fig. 2 both lean against the surface of rings 3 and 3'.
The surface of bed plates 8 and 9 is provided with a number of insert openings 10 of identical shape and dimension, which are distributed along the circumference of bed plates 8 and 9 according to a pattern which will be further explained. Two mould support blocks 11 and 11' are shown which are provided each with an identical elongated portion at their upper and lower side respectively, consisting of a block shaped auxiliary means 12 and 12'. The mould support block 11, 11' is at both sides provided at the lateral portions 13, 13' which are facing to the centre of mould clamping device 1, with additional surfaces 14, 14' which together form with the aforementioned lateral surfaces, the total clamping surface on which separate and, if required, differently shaped outer mould parts (not shown) can be clamped.
Obviously the shape is closely related to the possibilities of the removability in various directions.
The block-shaped auxiliary means 12, 12' is, see Fig. 12, provided with a cylindrical concave undercutting 15, 15' which serves as a supporting surface for a cylindrical rotable wedge 16, 16' placed against it. The insert opening 10, 10' in bed plates 8 and 9 is provided with a fixed counter wedge 17, 17' and the locking degree of the block-shaped auxiliary means 12, 12' is also determined by the self-adjustability of the position which can be occupied by the rotable wedge 16, 16' in the undercutting 15, 15'. The mutual position of the mould blocks 11, 11' with respect to both bed plates 8 and 9 and with respect to the column-shaped guiding means 2, 2' is clearly shown in Fig. 2.

After both bed plates have been moved towards each other while using pressure, which is exercised longitudinally to the guiding means 2, 2', the clamping and locking respectively of the mould support blocks 11, 11' with those bed plates 8 and 9 can be achieved by means of cooperating wedges 16, 16' and 17, 17'. The mutual position of the main elements of the mould clamping device takes place while using appropriate and known per se auxiliary equipment, such as lifting and transport apparatus and/or pressure cylinders and the like.
In order to realize the mechanical locking which has to comply with extremely high loads, the parts of a guiding means 2, 2' which are projected beyond bed plates 8 and 9, are provided with a specially undercut profile 18 (see Fig. 7) for locking bed plates 8 and 9 on the guiding means 2, 2'. This locking operation is subsequently achieved by means of a schematically shown clamping means 19, 19' which possesses a counter profile 20 which corresponds with profile 18. The clamping means 19, 19' is in each case attached to a bed plate 8 and 9 respectively and surrounds a guiding opening 7, 7' which mainly consists of two clamping sliding halves 21, 21' which are operated by means of pressure cylinders 22, 22'. With this description the operational core of the mould clamping device 1 is sufficiently explained to be understood by an expert.

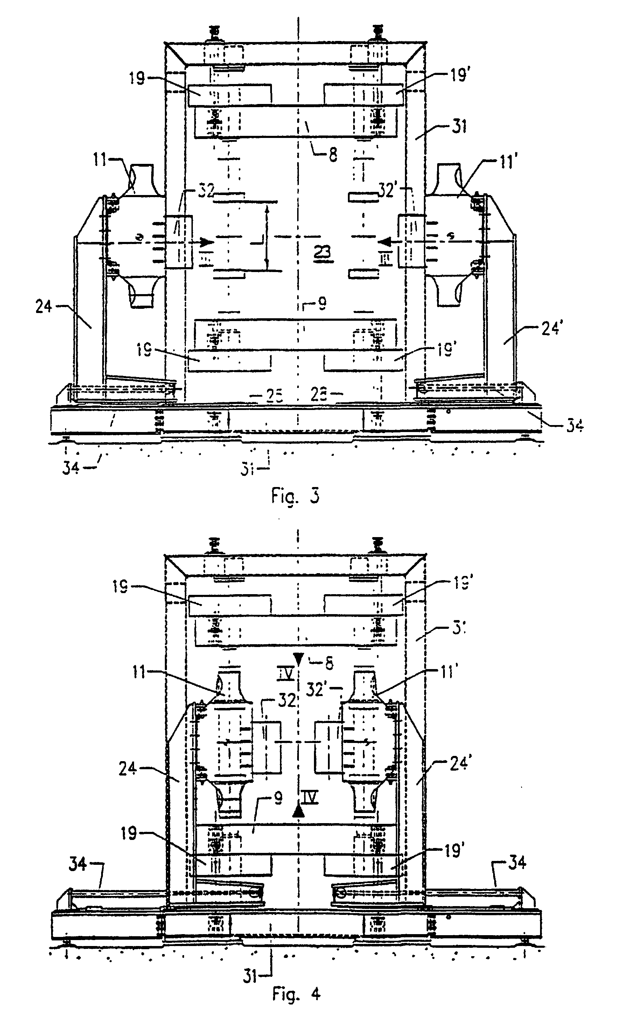

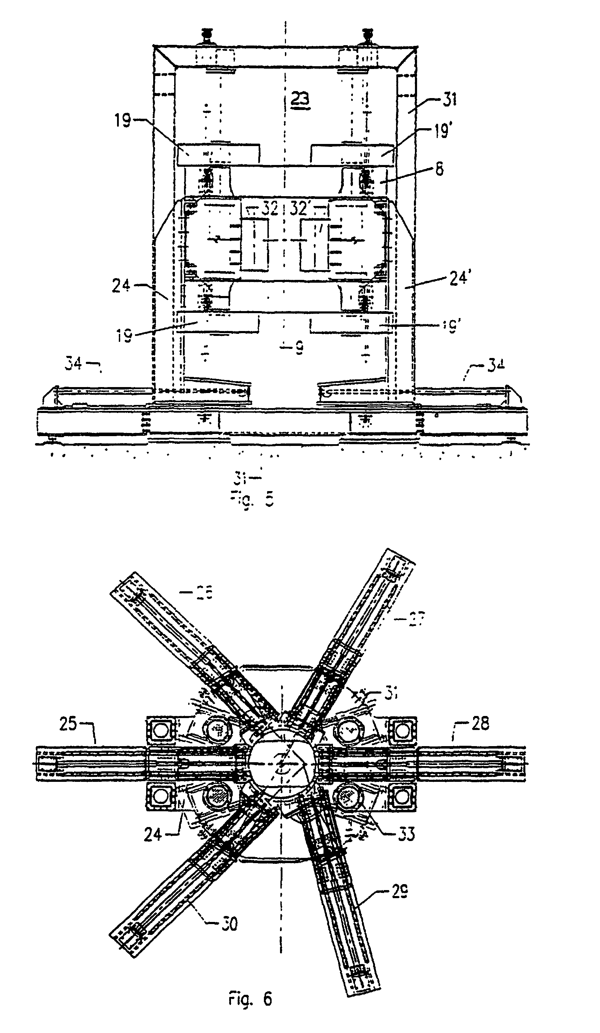

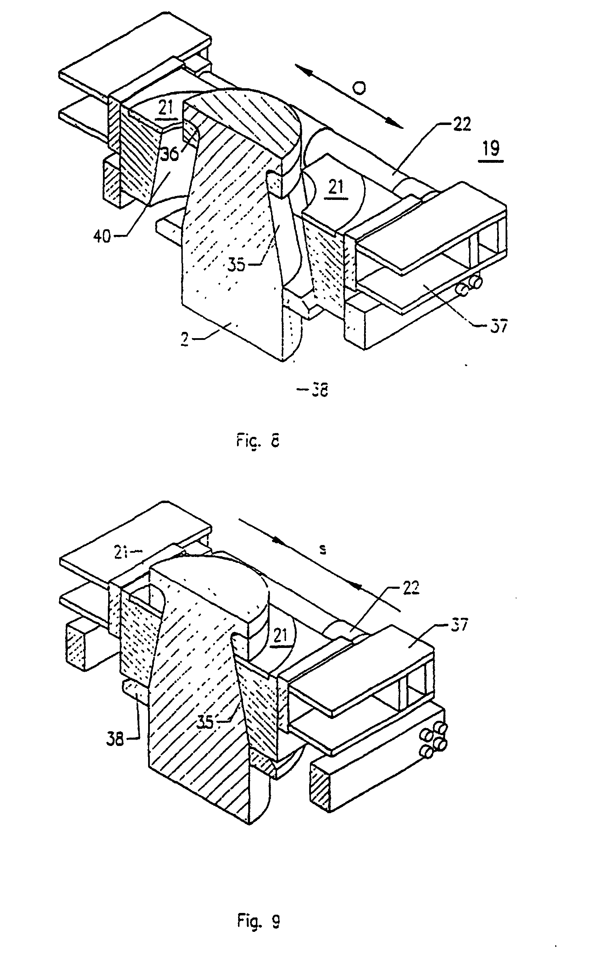

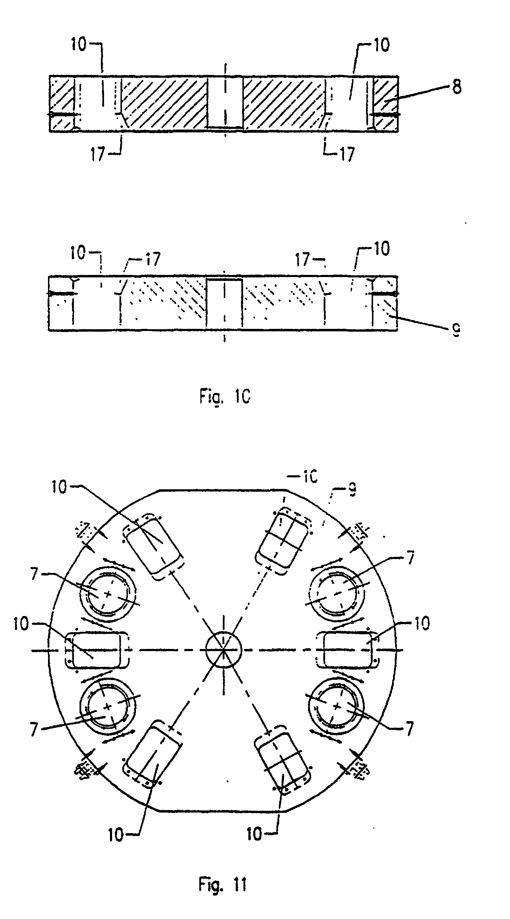

In Figures 3, 4, 5 (lateral view) and Fig. 6 (partial top view of the horizontal machine frame 31), a mould clamping device according to Figs. 1 and 2 is schematically shown which is integrated now in an injection moulding machine 23, the main elements of mould clamping device 1 as described above being visible here. In this case the mould blocks 11 and 11' are assembled on L-shaped machine stands 24, 24' and both stands 24, 24' are movable along the separate machine guidings 25-30 which are positioned on the horizontally arranged machine frame 31. Arrows III-III and I-I respectively indicate both directions of moving for exercising the clamping pressure for achieving the locking of mould support blocks 11, 11' by bed plates 8 and 9. In Fig. 6 the mutual arrangement of two of the seven mould support blocks 11 and 11' and the outer mould 32 and 32' mounted thereupon are shown schematically. Also four openings 33 in machine frame 31 are shown in which four lower parts 6, 6' (Figs. 1 and 2) of guiding means 2, 2' are inserted, after having been brought firstly through (four) guiding openings 7, 7' in the lower bed plate 9. The movement of the L-shaped machine stands 24 and 24' along the machine guidings 25-30 takes place by means of normal pressure cylinders 34 which are shown schematically. In this construction the mutual position of the machine guidings 25-30 in this embodiment is chosen in such a way that two of them, 25 and 28, are in line on an axis running parallel to the largest side of the rectangle, on the angular points of which intersect the axes of the four guiding openings 2, 2' and the plane of the horizontal machine frame. This arrangement is such that during the closing respectively opening of the outer mould 32, 32', the mould support blocks 11, 11' with the mould sections attached thereto, can move freely from the outside to the inside and vice versa.

In Fig. 7 the guiding means 2 is put through the upper bed plate 8 and the guiding means 2 is firstly provided with a conical part 35 of decreasing diameter, followed by a finishing part 36 which continues into the outer diameter of guiding means 2. This construction is shown in more detail in Figs. 8 and 9. The clamping frame 37 is attached to bed plate 8 by means of clamping ring 38. The clamping means 19 consists of two divided clamping slides 21 which together are integrated slidingly in a clamping frame 37. The control, opening and closing, arrows O and S respectively of those clamping slides 21 takes place by means of two pressure cylinders 22.

The operation of clamping means 19 at the location of locking is further explained in Figs. 8 and 9. In Fig. 8 pressure cylinder 22 has moved both clamping slides 21 away from each other in order to enable bed plate 8 (not shown), upon which the closed clamping ring 38 is attached by means of a number of bolts 39, to slide along side guiding means 2. The counter profile 20 of clamping means 19 consists of the tapering clamping block 40 which is attached to the clamping frame parts 37 which are enabled to make a movement towards each other by operating both pressure cylinders 22. In Fig. 9 the locking position of clamping means 19 is shown with respect to the conically undercut section on guiding means 2. In the construction of the injection moulding machine described here, a total of eight clamping means 19 are applied.
It is not necessary to explain further technical details of the operation of the principle of mould clamping device 1, integrated in injection moulding machine 23, as both lockings of the assembled outer mould 32 in the direction of arrows III-III and I-I, Figs. 3 and 4, is only achieved by means of normal pressure cylinders. Herein lies exactly the remarkable principle of the exercise and maintenance respectively of the necessarily required extreme high clamping forces. These are in fact realized by the mould clamping device itself.

In Figs. 10 and 11 the mutual position of the different guiding openings 7 for the guiding means 2 and the insert openings 10 for the block-shaped auxiliary means 12 in bed plates 8 and 9 of Figs. 1 and 2 is shown. Wedge surfaces 17 are also schematically indicated. Fig. 12 shows in enlarged scale the position of the auxiliary means 12 towards bed plate 8. The counter wedge 17 is attached by means of bolt 41 to a connector segment 42, which itself is attached to the upper side of bed plate 8. Counter wedge 17 can be adjusted at height or depth by means of bolt 41. The wedge angle is not larger than 8° in the embodiment shown here. In the cylindrical undercutting 15 a cylindrical wedge is positioned which is protected for dropout by means of a bolt 43 which allows for some movement of wedge 16. The shape of undercutting 15 allows cylindrical wedge 16 to move by adjusting the angle of wedge surface 16 only in cooperation with counter wedge 17 while being put in insert opening 10. This vertical locking thus achieved enables optimal lateral locking of all mould sections 32, 32' which are attached to mould support block 11. In the event of a correction being necessary to this locking, this could e.g. be achieved by adjusting the cooperating surfaces between wedges 16 and counter wedge 17.

However, exceptional for this invention is that to maintain the required extremely high clamping forces, caused by the necessity to prevent leakage of plastic mould material during injection moulding, use is made only of relatively simple mechanical means which are normally available with a usual injection moulding machine. The high mould clamping forces which are required for injection moulding are after all achieved by locking in such way, on one hand in almost radial sense, on the other hand in vertical sense, that the required forces can be easily maintained by both bed plates 8 and 9 of mould clamping device 1 which are fully fit for the very high loads, while the very effective vertical locking of both bed plates 8 and 9 with respect to guiding means 2, 2' also largely contributes to the fact that the required high clamping forces can be maintained upon the mould during injection moulding and afterwards during the cooling down of the product. No additional pressure energy through pressure equipment is to be used.

Whilst in the embodiment bed plates are used, application thereof can be realized by means of a central hub with sections containing insert openings for guiding means, whereas its outer circumference may be shaped as a clamping ring. This clamping ring can be provided with adapted wedge surfaces which cooperate with counterwedge surfaces at the mould support blocks.

In a practical realization of an embodiment of a vertical injection moulding machine according to the invention, it has a vertical height of ± 6 m, the height of the mould support block being 1,5 m and in an open position of the mould clamping device a height difference of 3 m exists between the inner surfaces of bed plates 8 and 9 which face each other.
The required space for the arrangement of the injection moulding machine, see Fig. 5, with the machine stands 24 in open position, has an average diameter of 6 to 7 m till the outer edge circumference of the buffer blocks (terminations of the guiding rails, Fig. 1) for stands 24. In order to resist the extremely high forces, each massive bed plate having a diameter of ± 3 m. has a thickness of 0,5 m. A guiding means 2 may reach a total length of 5,5 m and a diameter of 0,3 m, with which tensile strain or deflection can be resisted. The injection moulding machine in which the mould clamping device is integrated, is e.g. able to operate with a total clamping force of e.g. 9,000 tons in all directions.
In order to provide for opening and closing the mould clamping device it is no longer necessary to dispose of heavily dimensioned expensive pressure equipment, as now simple mechanical locking means are provided for.

According to the invention, the new method applied to a mould clamping device to be used in order to exercise extremely high clamping forces as described before, thus consists of the following actions:
- at least two elongated guiding means 2 and 2' are inserted in guiding openings 7 of at least two bed plates 8 and 9;
- if necessary, the required inner mould sections are attached to bed plates 8 and 9;
- a number of mould support blocks 11 and 11' are placed each time between bed plates 8 and 9, on which separate mould sections are attached, which together form the complete outer mould;
- auxiliary means 12 and 12' attached to the mould support blocks are locked in bed plates 8 and 9 by means of the movement towards each other of those bed plates along the guiding means 2 and 2', generating simultaneously increasingly higher mould clamping forces with respect to the final assemblage of the completely closed outer mould which is built up by separate complementary mould sections;
- after increasing the clamping forces in inward direction towards the outer mould, the mutual position of bed plates 8 and 9 with respect to the guiding means 2 and 2' is locked by means of a number of clamping means 19, thus generating the clamping force for the separate mould sections in a direction parallel to the guiding means 2 and 2';
- after the outer mould being closed universally applying clamping forces, maintenance thereof before, during and afterwards while neutralizing, is exclusively achieved with respect to the injection moulding by application and removal respectively of mechanical lockings, without thereby performing any application of extremely high hydraulic and/or pneumatic pressure on the mould;
- the injection moulding is initiated amongst others by heating the mould and subsequently filling the mould under high pressure, after which removal of the mould sections takes place in a reversed order and removing the injection moulding product.

According to the invention the mould system is in fact to be considered as a kind of open moulding fist in the inside of which the moulding product is realized. By closing the moulding fist with a remaining high constant force, the injection moulding can take place while the closure of the moulding fist takes place in a relatively simple and energy-saving way.

As it is also possible to place the mould clamping device in a horizontal position, a second constructive realization in a horizontal injection moulding machine will be explained.

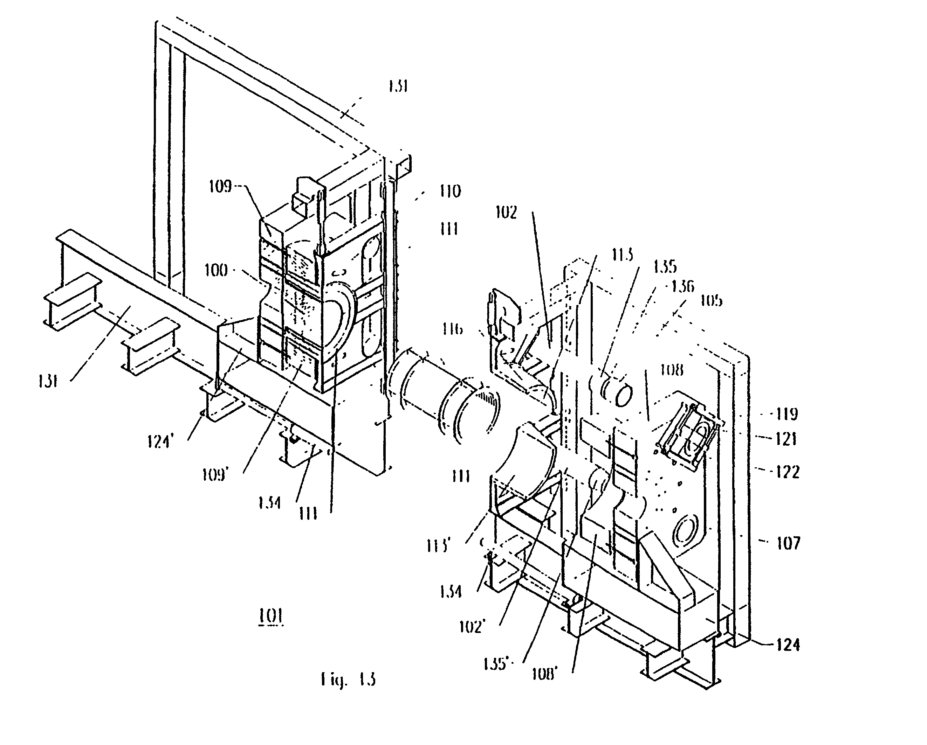

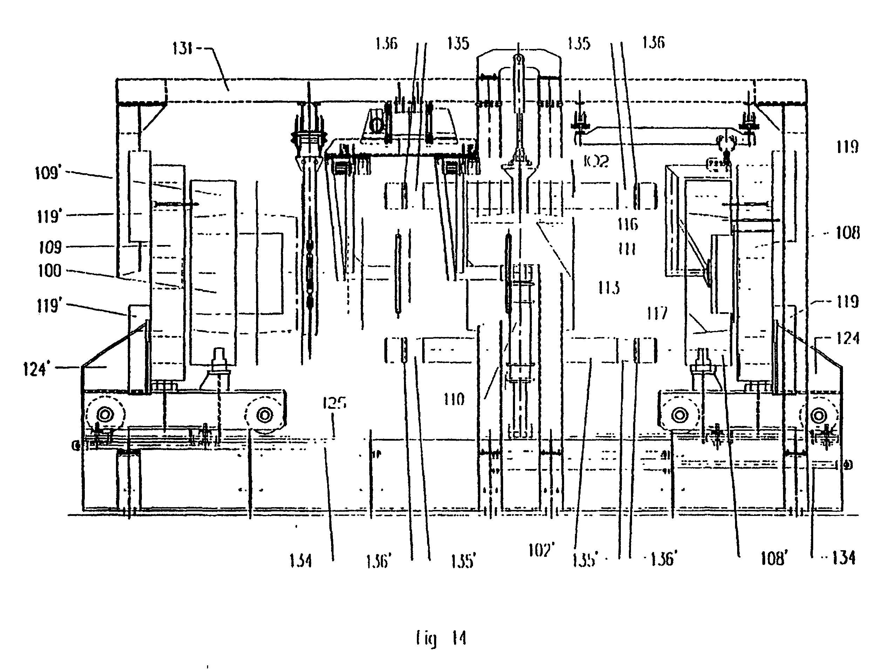

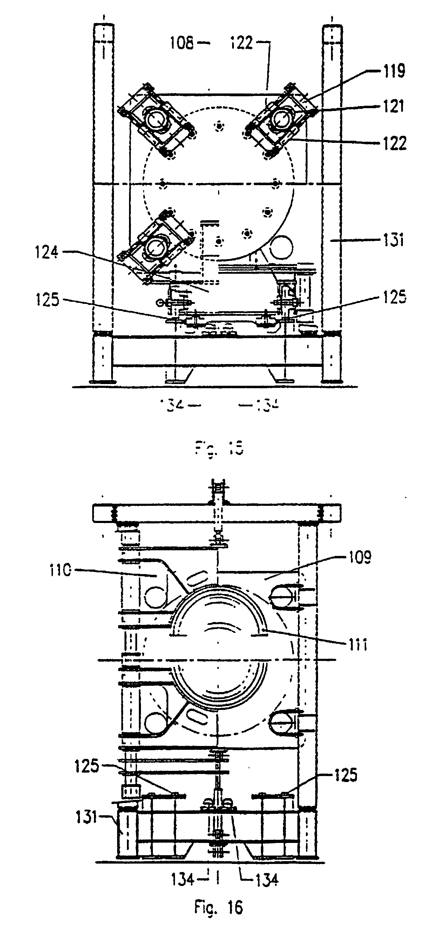

According to Fig. 13 a mould clamping device 101, horizontally arranged is basically identical to mould clamping device 1 of Fig. 1 and corresponding machine parts bare the similar references. Guiding means 102 are guided in bed plates 108 and 109, while the mutual locking of the bed plates takes here also place with clamping means 137 applying the same locking means 135 and 136. The function of mould support blocks 11 in Fig. 1 has been taken over by quarter-cylindrical mould sections 111 which are locked by means of movement towards each other of bed plates 108 and 109 in cylindrical clamping blocs 109', which establishes the mechanical interlocking for the required force with the conical wedge surfaces 117 and 116 respectively.
The moulding product 100 is only shown by means of an example, but the separate outer mould sections which are attached to mould sections 111 are not shown. Fig. 14 shows also an arrangement of a mould clamping device 101 according to Fig. 13 in a frame of an injection moulding machine, bed plates 108 and 109 being longitudinally to the machine movable on stands 124, 124', along a common guide rail 125. The movements for opening and closing of the mould device can be achieved by pressure cylinders 134, which can establish each time a movement of each of the stands 124 with respect to the fixed central console 110. In the embodiment shown here a lifting device for placing the mould sections is integrated, which does not need further explanation and it does not belong to the invention. Figs. 15 and 16 show the arrangement in a lateral view of the horizontal injection moulding machine with guiding means 102 and the arrangement of clamping means 137 and it shows also how a vertical movement of the mould sections can be achieved. In view to the fact that the mould clamping device contains basically the same main elements for the movability in all directions and locking respectively of these main elements, no further explanation is needed as an-overall view of the total arrangement of this injection moulding machine will be sufficient.
The mould shown in Fig. 14 defers from the one shown in Fig. 13, but this does not change anything to the new principle.

Constructive embodiments of elements of the mould clamping device are further established in the patent claims in view of the fact that the embodiments described above have appeared to be effective. A special value has to be assigned to the cylindrical undercutting of the auxiliary means 12 attached to mould support block 11. In Fig. 12 arrow P indicates the pressure-direction which has to be resisted by the mould support block if auxiliary means 12 is locked in bed plate 8 under application of locking by means of cooperating wedges and counterwedge surfaces 16 and 17. In fact, the locking of bed plate 8, achieved on one hand by means of wedge-operation, on the other hand by means of locking of the locally specially shaped guiding means 2, shown in more detail by means of clamping means 37, guarantees that, applying normally available pressure equipment, extremely high clamping forces can be achieved, which normally can not be achieved by the simple means described here.

Figs. 3-5 show schematically how mould support blocks are suspended to stands 24 and 24'. For this purpose a stand is each time provided with two suspension eyes which are positioned vertically above each other. The mould support block 11, 11' itself is provided with a pin or axis which is guided through a suspension eye. The mould support block retains thus a certain self-adjusting capacity if the clamping movement is initiated. The suspension of the mould support block is also determined by several pins on the angular points, which can be appreciated in detail in Fig. 3.

According to the invention the principle of the method applying a multipartite outer mould relies on a number of proceedings which are applicable even without using the mould clamping device.
In that event, the internal mould hole of the outer mould is initially provided with a number of separate core sections which, thus assembled altogether, constitute the required inner mould, whereby each of the separate outer mould sections of the multipartite outer mould are brought together in a direction pointing towards the inner part of the mould, mainly formed subsequently around the outer mould, in such way as to complete and close the outer mould.
Subsequently this outer mould remains closed in this position by means of externally exercising of a temporary acting, relatively high clamping force and before the injection moulding starts as well as afterwards, this temporary acting clamping force turns into a constantly lasting extremely high clamping force, which is absolutely required during the injection moulding. Maintenance thereof takes mainly place applying a relatively simple mechanical locking, particularly by some kind of direct or indirect mechanical locking of all outer mould sections in order to form the closed outer mould, which is achieved and permanently maintained during the subsequent cooling down process, without the need of extreme complex hydraulic clamping forces to be generated and maintained respectively for keeping the outer mould closed during injection moulding.

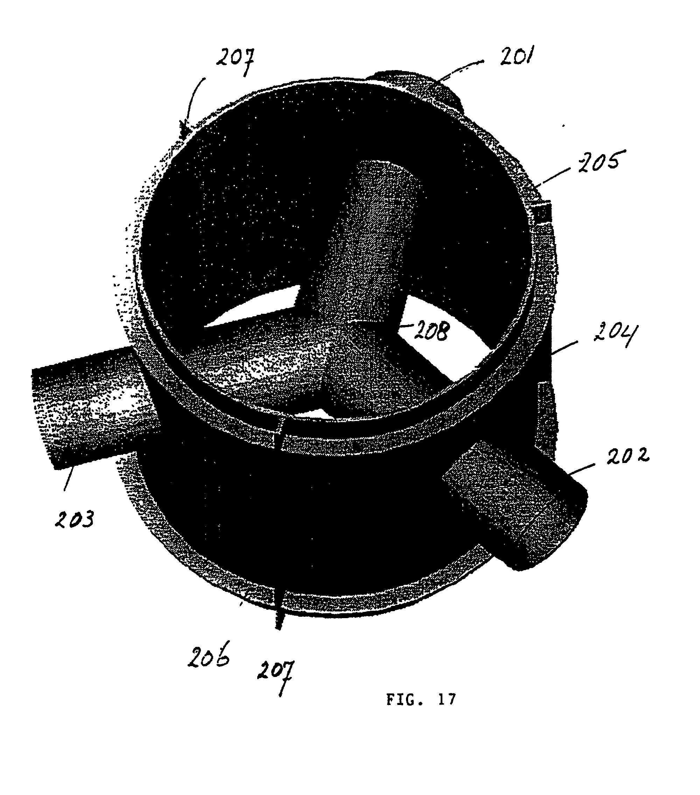

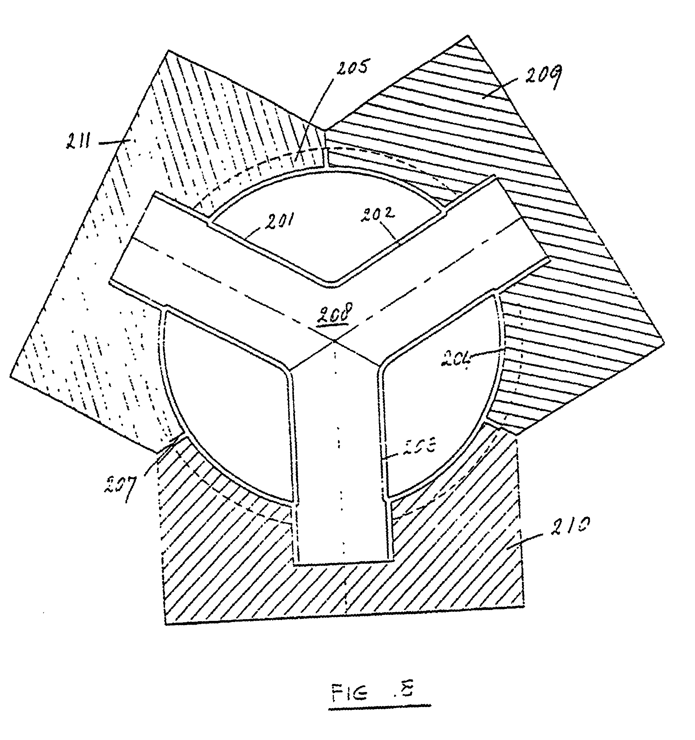

In Fig. 17 three pipes 201, 202, 203 are guided through the cylindrical outer jacket 204 of a bottom section, whereby jacket 204 is provided with a number of flanges 205, 206 and radial enforcement ribs 207. The three pipes 201-203 are interconnected centrally at the bottom section and constitute a Y-shaped connection 208. Fig. 18 shows, in a cross sectional view according to the central axis of pipes 201-203, three outer mould sections 209, 210, 211 in closed position of the complete outer mould. For the purpose of simplicity the upper and lower mould sections in axial position and the necessary core mould sections for the Y-shaped connection 208 for the moulding product according to Fig. 17 are not shown in detail.

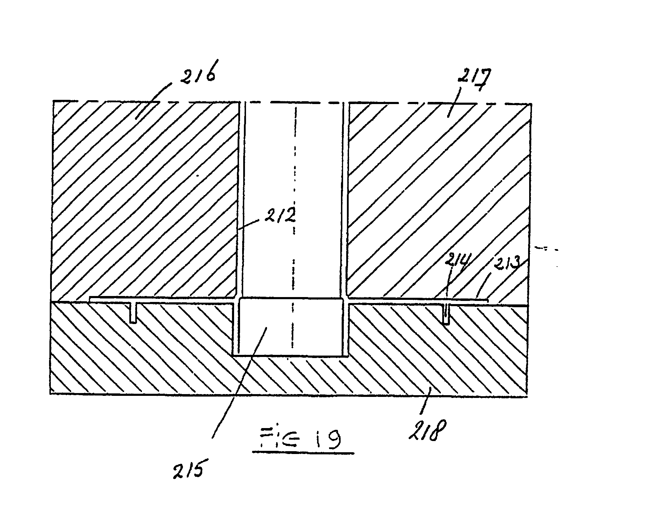

In Fig. 19 only the lower part of a tubular shaped moulding product 212 is shown which is provided with a radial fin 213 and an axial rib 214. In order to manufacture moulding product 212 of the moulding system a mould core 215 is used for the hollow pipe of the moulding product and further a part of a left mould section 216 and a right mould section 217 are visible, as well as a lower mould section 218.

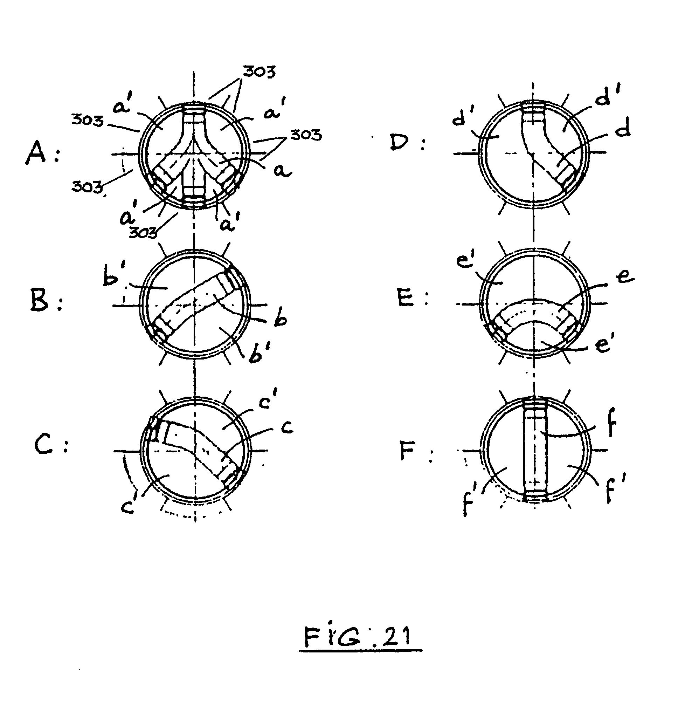

Fig. 21 shows a number of manhole bottom-types A, B, C, D, E, F, which are manufactured each with a mould of the mould system according to the invention. All connecting sleeves of those manhole bottoms have the same diameter. However, it is possible to manufacture a manhole bottom with other mould elements of the mould system according tot the invention, applying connecting sleeves under different angles and/or with different diameters.

Manhole bottoms A, B, C, D, E, F are provided with flow profiles a, b, c, d, e, f by means of which the connecting sleeves within manhole bottoms A-F are connected together.
Surfaces a'-f' of flow profiles a-f are interconnected in such a way that each flow profile a-f forms a channel in the bottom of a manhole bottom. These surfaces a'-f' decline obliquely to flow profiles a-f.

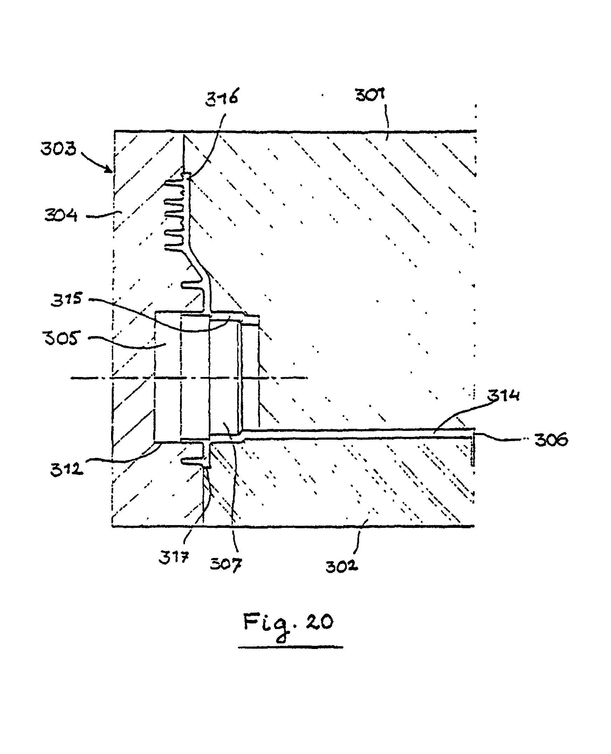

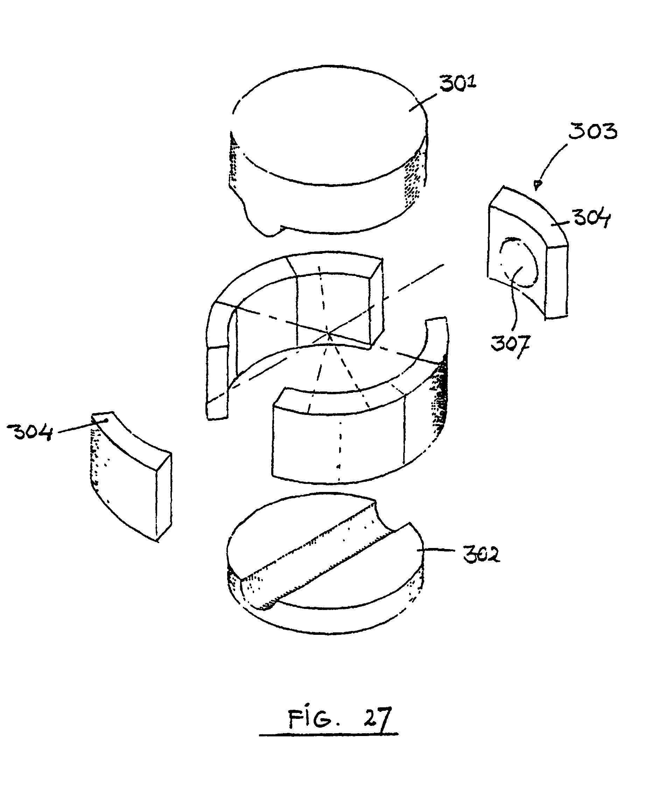

For manufacturing a manhole bottom use is made of a mould of the mould system according to the invention. Preferably the mould comprises eight sections, one core part 301, a corresponding bottom section 302 and six lateral sections 303 (figs. 20, 23 and 27). Each manhole bottom type requires a differently shaped core part 301 and a differently shaped bottom section 302 which corresponds to core part 301. Lateral sections 303 consist each of a base section 304 and a removable exchangeable section 305 which is located in a notch 312 in base part 304. Core part 301, bottom section 302 and the six lateral sections 303 together form in the closed position of the mould a mould hole 306 for a manhole bottom. The exchangeable section 305 shown in Fig. 20 comprises a core 307 which determines the inner shape of a connecting sleeve of the manhole bottom. Core 307 is connected with core section 301. The bottom hole shaped by mould hole 306 comprises a bottom 314, connecting sleeves 315, a connecting section 316 and a lower edge 317.

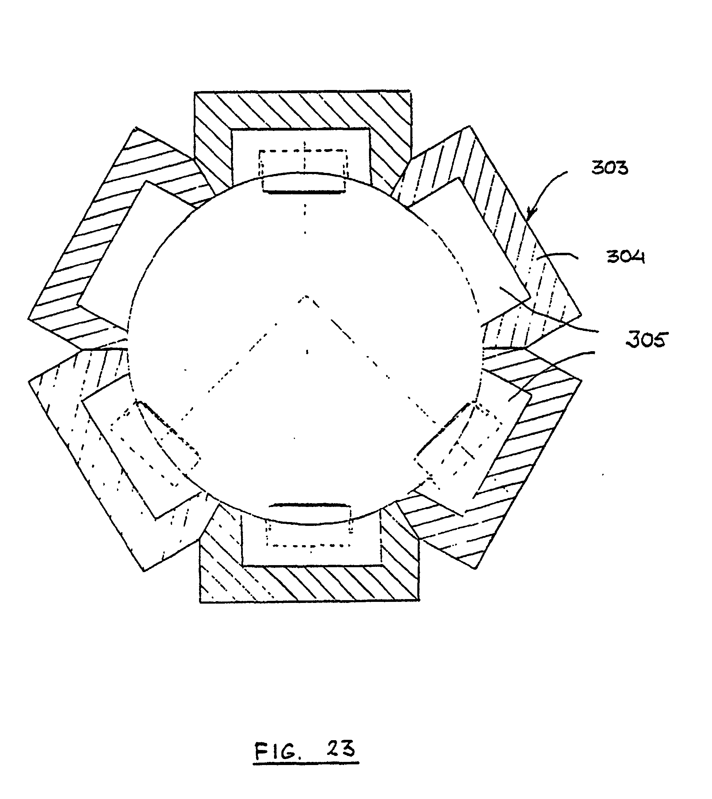

Fig. 23 schematically shows in a horizontal cross sectional view, located at the exchangeable sections, six lateral sections which form together a lateral mould section. The exchangeable sections shown in Fig. 23 are chosen in such a way, that a manhole bottom of the A-type (see Fig. 21) can be manufactured by means of the corresponding mould. For this purpose four exchangeable sections are realized with core 307 and two without respectively.
Fig. 23 shows further that the different lateral sections 303 can not be removed radially, after having moulded the manhole bottom, since the central axes of the connecting sleeves do not all intersect the central axis of the manhole bottom. The direction for removal of the lateral sections 303 is determined by the central axis of the connecting sleeves. The central axes of the connecting sleeves together must enclose a previously defined angle, whereby the central axes need not necessarily be provided in the same plane. The previously defined angle is generally not identical to the angles which are enclosed by the central axes of the lateral sections. For the construction of the mould it is necessary that core 307 fits entirely within the circumference of exchangeable section 305.
If the central axis of a lateral section 303 and the central axis of core 307 of the exchangeable section 305 located in the lateral section 303 are not parallel, core 307 can only be placed in exchangeable section 305 in such way, that the central axis of core 307 intersects the central axis of the manhole bottom, provided that the diameter of core 307 is sufficiently small. With large diameters of core 307 this is not possible without projecting core 307 partly to the outside of the exchangeable section.

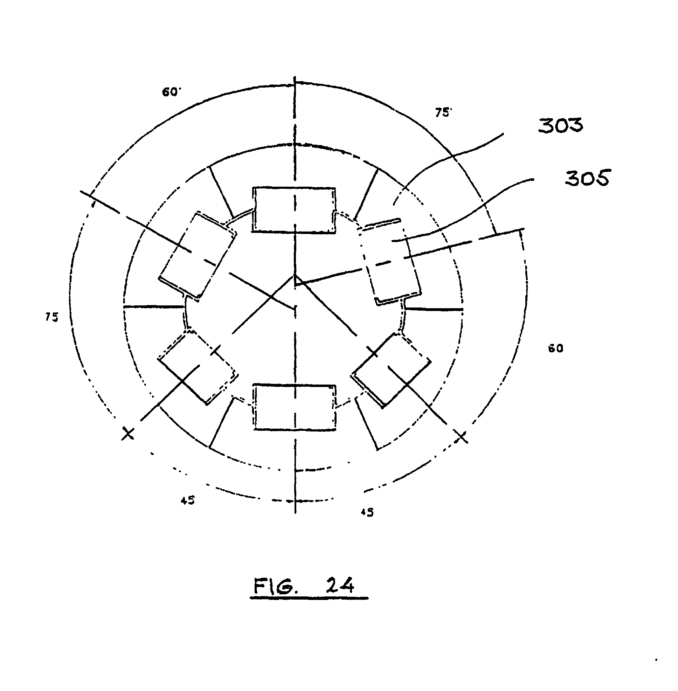

In Fig. 24 a lateral mould section of the mould system according to the invention is schematically shown with a exchangeable section 305 for a connecting sleeve in each lateral section.

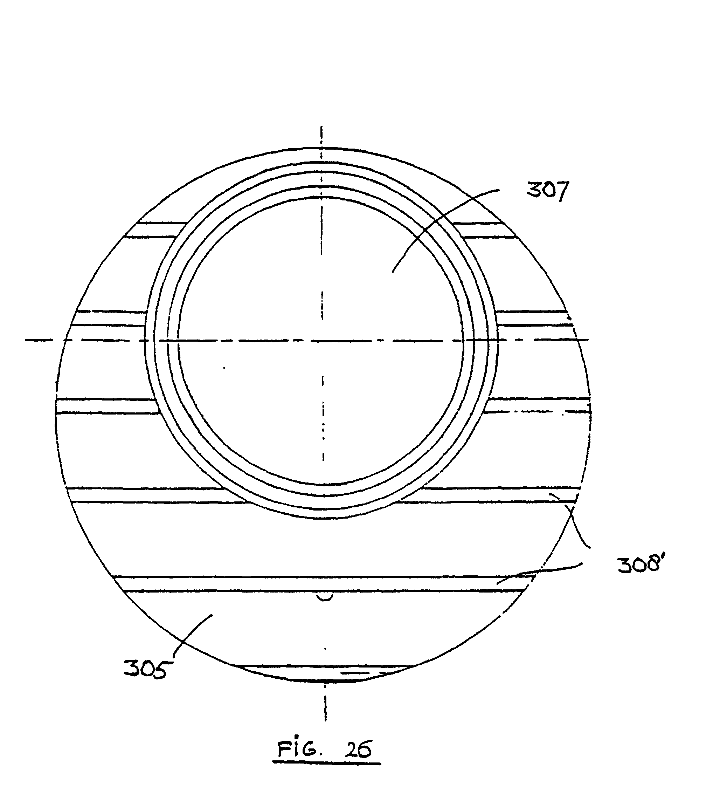

The inner side of each lateral section has a length of arc which is identical to 1/6 part of the total inner circumference of the manhole bottom. The central axes of three connecting sleeves are crossing the central axis of the manhole bottom. The central axes of the other connecting sleeves are distantly positioned from the central axis of the manhole bottom. This follows from the choice of the mutual angles between the central axes, together with the fact that an exchangeable section is located mainly in the centre of a base section. The angles formed by the central axes of the connecting sleeves are also indicated in Fig. 24. The choice of angles shown in Fig. 24 makes it possible to manufacture manhole bottoms of which the connecting sleeves form an angle which varies from 45° to 180° in steps of 15°.

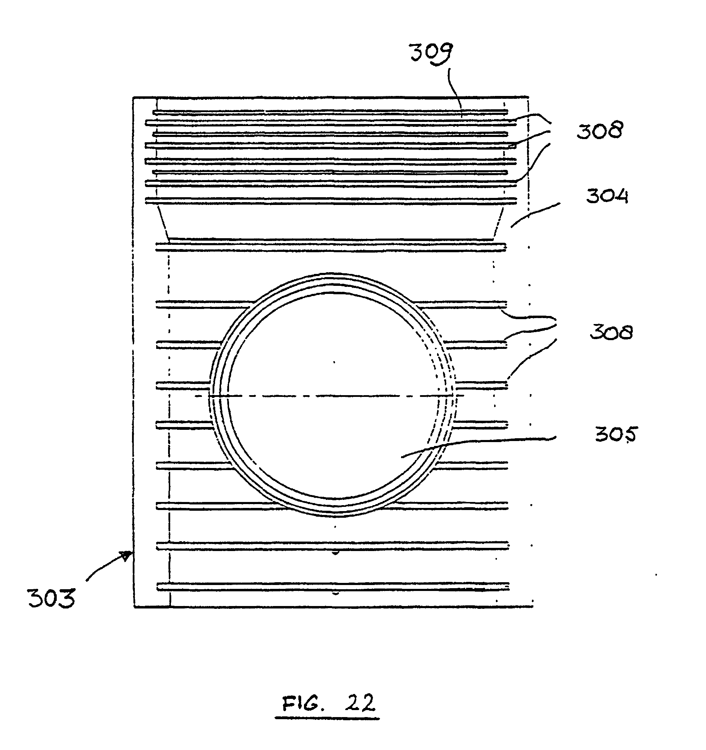

Figs. 22 and 24 show a front view and a top view respectively of lateral section 303, in which an exchangeable section 305 is assembled which determines the inner mould of a connecting sleeve of a maximum diameter. The base section 304 is provided with notches 308, which determine the mould hole of reinforcing ridges of the manhole bottom to be made. Base section 304 comprises further a section 309, which determines the mould hole of connecting section 316 (see Fig. 20) of the manhole bottom to be manufactured in order to connect a bottom shaft to the manhole bottom. The exchangeable section 305 is positioned in notch 312 by means of a freely removable connection, e.g. a bolted joint.
Exchangeable section 305 shown in Fig. 26 comprises a core 307 which determines the inner mould of a connecting sleeve which possesses a diameter which is smaller than the maximum diameter. Core 307 is positioned eccentrically with respect to the circumference of exchangeable section 305 in a vertical direction upwards. Core 307 can also be positioned concentrically or eccentrically in horizontal direction on exchangeable section 305. Notches 308' are connected with corresponding notches 308 of base section 304. It is obvious that the exchangeable sections and the base sections may be provided with provisions for cooling-down.
The height of bottom section 302 (see Fig. 20) can be adapted to the diameter of the connecting sleeves. This makes it possible that the distance between the central axis of the connecting sleeves and the lower edge 317 of the manhole bottom is minimalized, without adjustment of the lateral sections 303 being necessary.

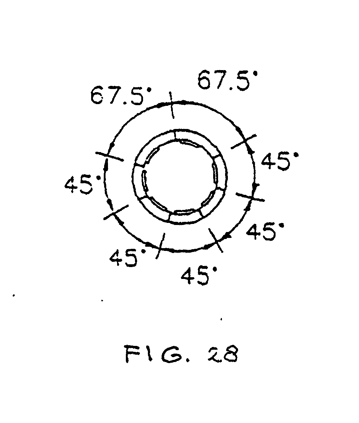

Fig. 28 shows in a very schematic way another embodiment of the mould according to the mould system of the invention. In this construction the lateral section comprises seven lateral section parts 303. The central axes of cores 307 for the connecting sleeves to be manufactured intersect the central axis of the mould. The central axes of cores 307 mutually define angles of 45° and 67,5°. This choice of angles between the central axes of the cores for the connecting sleeves and the position of the lateral section parts as shown in Fig. 9, makes it possible to manufacture manhole bottoms in which the angle between the connecting sleeves varies from 45° to 180° in steps of 22,5°. A different choice of the angles between the central axes of the cores for the connecting sleeves makes it possible to manufacture a manhole bottom of any required different shape.

Further constructive details of both embodiments are explicitly mentioned in the patent claims and are also shown in the drawing, a further description thus not being necessary. The extraordinary results thereof concern the total design of the mould clamping device and the vertical and horizontal injection moulding machine with which all aforementioned advantages can be achieved.
The mould system which is described below, can basically be applied to the mould clamping device, according to patent claims 1-8 and 10-23.
The mould clamping device is further applicable with the method, provided that comparable technical means are applied in such a performed construction that the same method is used according to claim 10.

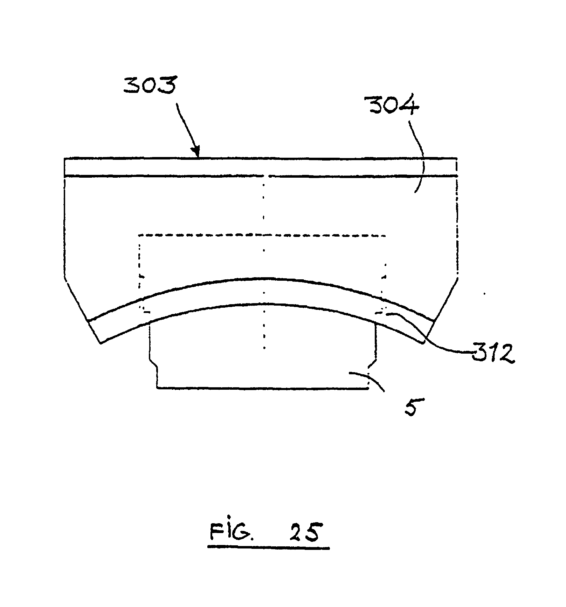

The mould system which consists of a multipartite outer mould is, for simplicity's sake schematically, shown in Fig. 5 by 32, 32'. Figs. 18-20, 23-25 and 27-28 show the different outer mould sections which are attached to mould support blocks 11, 11' in Fig. 2 by means of fixing means known per se.

## Claims

1. Mould clamping device provided for generating high clamping forces, from 500 tons up, more particularly for use in an injection moulding machine for making voluminous products thereto requiring strong clamping forces, which clamping device consists basically of the combination of:
a. at least two bed plates (8,9). e.g. one fixed and one movable bed plate, on which inner mould sections can be placed, which bed plate (8,9) is provided with at least two guide openings (7) for conveying an elongated guiding means (2), and which is also provided with a number or insert openings (10) for receiving auxiliary means (12) which are provided on at least two mould support block sections (11) for transmitting extremely strong clamping forces to the mould support block sections (11), which clamping forces mainly are generated by the application of a direct contact only between bed plate (8,9) and mould support block section (11);
b. at least two elongated guiding means (2), in which each guide organ (2) is provided in between of its extremities with at least two spacing means (3) for limiting the mutual closing distance between the bed plates (8,9) with mould support block sections (11) enclosed in between, in the event that the clamping forces act in a longitudinal direction with respect to the guiding means (2);
c. at least two mould support block sections (11), each provided with the above mentioned auxiliary means (12) and upon which mould support block sections (11) the outer mould sections of the product-mould to be enclosed, can be attached by means of fixing means;
d. a first number of control and pressure means (34) for inward or outward moving of each of the mould support block sections (11) for closing or opening respectively the mould sections attached to the mould support block sections (11) for the finished product.
e. a second number of control and pressure means (22) for locking the auxiliary means (12) to the mould support block sections (11) in the insert openings (10) which are provided in the bed plates (8,9);
f. a number of separate clamping means (37) for locking a guiding means (2) with respect to its position towards a bed plate (8,9) en of the latter towards the aforementioned spacing means (3);
g. a machine frame to which or in which said machine parts mentioned under a) up to and inclusive f) are integrated to form a complete injection-moulding machine.

2. Mould clamping device according to claim 1, **characterized in that** a mould support block section (11). due to the high acting clamping forces, consists of a somewnat elongated flattened square central section which possesses an essential size and mass and which is elcngated towards its extremities into a square auxiliary means (12).

3. Mould clamping device according to claim 2. **characterized in that** the square auxiliary organ (12) is provided with a concave undercutting (15) at its side which is opposite to the mould.

4. Mould clamping device according to claim 3. **characterized in that** the concave undercutting (15) is shaped in a circular way and serves as a supporting surface for a wedge surface (16), of which the desired oblique position can be adjusted with respect to the undercutting (15) in cooperation with a counterwedge surface (17) which is piaced in the insert opening (10), by means of fixing and adjusting means (41, 43).

5. Mould clamping device according to claim 4, **characterized in that** the insert opening (10) for the auxiliary means (12) which is located in the bed plate (8,9), is provided with a corresponding counterwedge surface (17) which, during a clamping movement of the bed plate (9) collides against the aforementioned wedge surface (16) and thereby generates the clamping force.

6. Mould clamping device according to claim 1, **characterized in that** the guiding means (2) has all along its entire length a circular cross section of generally equal diameter, except at the position of the spacing mean (3) which is each time constituted by an annular collar section which is provided on the required distance from the extremity of the guiding means (2) and also nearby and at a distance having the same dimension as the thickness of the bed plate (8,9) in the direction of the extremity of the guiding means (2), the latter being undercut to a smaller diameter (35,36) over a total length which corresponds with the height of the aforementioned clamping means (37).

7. Mould clamping device according to claim 1, **characterized in that** the guiding means (2) presents a circular cross-section of equal diameter over its entire length except nearby its extremity whereby the latter section is undercut to a smaller diameter (35, 36), corresponding with the height of the aforementioned clamping means (37).

8. Mould clamping device according to claims 6 and 7, **characterized in that** the clamping means (37) which establishes its locking function with respect to the undercutting in the guiding means (2), is divided in parts.

9. Method for manufacturing an injection-moulded product by the application of a mould clamping device according to any of the foregoing claims 1-8, **characterized in that** at least the following operations are performed:
- at least two elongated guiding means (2) are positioned in the insert openings of at least two bed plates (8,9);
- if necessary the required inner mould sections are attached to the bed plates (8,9);
- a number of mould support block sections (11) is placed between the bed plates (8,9) on each of which separate mould sections are attached which together constitute the complete outer mould (32,32');
- the auxiliary means (12) attached to the mould support blocks (11) are each time locked by the inward:movement of the bed plates (8, 9) over the guiding means (2) provided in these bed plates (8,9), generating simultaneously increasingly higher mould clamping forces with respect to the final composition of the complete closed outer mould (32,32') which is built of separate complementary mould sections;
- the mutual position of the bed plates (8,9) with respect to the guiding means (2) is locked in an inward direction towards the outer mould after increasing the clamping forces (III-III) by means of a number of clamping means (37), thus generating the clamping force for the separate mould sections (32,32') in a direction (I-I) parallel to the guiding means (2);
- after the outer mould thus being closed all-around by applying locking forces, the maintaining thereof before, during and after terminating the injection moulding method, is exclusively established by the application and removal of mechanical locks (8, 9 and 37) without any application of extremely high hydraulic and/or pneumatic pressure on the mould being necessary.
- the injection moulding method is initiated amongst others by warming up the mould and subsequently filling up the mould while applying high pressure after which unlocking of the mould sections takes place in reverse order and the injection moulded product is than removed.

10. Injection moulding machine, particularly a vertically disposed injection moulding machine, wherein is integrated a mould clamping device (1) according to claims 1-8, **characterized in that** the machine frame (31) consists of a centrally arranged horizontal base table. particularly of polygonal shape, on which at both sides of a diametrically centre line in the plane of the base table, four nesting places are provided for each extremity, particularly non-circular extremity of the guiding means (2) to be positioned vertically; the base table being provided furthermore with at least two, particularly six table guidings which are running in an outward direction.

11. Injection moulding machine according to claim 10, **characterized in that** each mould support block (11) is attached to an elongated vertical L-shaped stand (24) which on its inferior part turns into an elongated horizontal base movable along a table guiding (25-30) in order to open and to close respectively the divided outer mould (32, 32').

12. Injection moulding machine according to claim 11, **characterized in that** the mould support block (11) is fixed at the upper side of the stand (24) by means of a central axis (fig. 3-5) at the rear side of the mould support block whereas the mould support block (11) is locked with respect to the upper part of the stand by the provision of four pins or bolts (Fig. 3) which are projecting laterally perpendicularly on the angular points of the mould support block (11), which pins or bolts are inserted in holes provided at corresponding positions on the stand (24).

13. Injection moulding machine according to claim 12, **characterized in that** the side (13) of the mould support block (11) which faces the outer mould (32, 32') is formed by a flat and laterally, till beyond the mould support block (11) broadened clamping table (14) for clamping the outer mould part, which clamping table (13, 14) is also provided with a number of clamping means.

14. Injection moulding machine according to claims 10-13, **characterized in that** in a side view the stand- and base construction (24) is L-shaped and that the intersections of three central axis of the guiding tracks (26, 29, 30) meet the common central axis of two mutually prolongated central axis of the guiding tracks (25, 28) at a point distant from the intersection of diagonal lines drawn between the vertical central axis of the guiding means (2) which are located on the edges of a rectangle, which intersection also nearly intersects with the central axis of the remaining table guiding (27).

15. Injection moulding machine according to claims 10-14, **characterized in that** a compound double machine framework yoke is placed in an astride way with respect to the two guiding tracks (25, 28) which are placed in a mutually prolongated position and **in that** the mutual distance between the oppositely angled legs of said machine frame yoke is dimensioned in such a way that during the opening and/or locking of the outer mould (32, 32') the stands (24) with the mould support blocks attached thereto are movable either between the legs of the machine framework yoke or between the fixed position of the guiding means (2).

16. Injection moulding machine according to claim 15, **characterized in that** in a horizontal plane of the base table of the injection moulding machine, the intersections of the vertical central axis of the guiding means (2) and the intersections of the vertical columns of the machine framework yoke are all positioned at the sides or on the edges of an imaginary rectangle respectively.

17. Injection moulding machine according to claim 16, **characterized in that** the height of the double 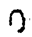 -shaped machine framework yoke above the base table corresponds at least with the sum of twice the height of a bed plate (8, 9), and increased with the height of the upper end of a mould support block (11) which projects itself above the base table.

18. Bed plate to be used in a mould clamping device and!or an injection moulding machine according to one of the foregoing claims 1-8 and 10-17. **characterized in that** each disc-shaped bed plate (8, 9) of an essential material thickness and made of solid material, is provided with four guide openings (7) for each of four guiding means (2), the centre points of these guide openings (7) being positioned on the edges of a rectangle and further six insert openings (10) are provided which are positioned diametrically in front of each other with respect to the centre of the bed gate (8, 9) and alcng the inner circumference of the bed plate (8, 9), particularly of a rectangular configuration. which each are provided at one side, which is turned to the centre of the bed plate (8, 9) and at least halfway thereof, with a wedge-shaped surface (17) which cooperates with the corresponding wedged surface (16) on a cooperating auxiliary means (12) attached to the mould supoort block (11).

19. Bed plate according to claim 18, **characterized in** than the wedge angle ≤ 8°.

20. Elongated guiding means (2) to be used in a mould clamping device (1) and/or injection moulding machine according to each of the foregoing claims 1-8 and 10-17, **characterized in that** an undercutting is provided near each extremity of the guiding means (2) so that a divided clamping means (37) can be placed in it in order to close on the outside a bed plate (8, 9) the inner side of which gives support to a fixed collar (3) being attached to the guiding means.

21. Injection moulding machine, particularly a horizontally placed injection moulding machine, wherein is integrated a mould clamping device (1) and/or an injection moulding machine with bed plate (8,9) and guiding means (2) according to claims 1-8 and 10-17, **characterised in that** the machine framework (31) consists of an elongated horizontal base table which is provided with table guidings (25) and with a central console (11) on both sides of which a stand (24) is provided, which is movable and slidable respectively along table guidings (25), provided with a bed plate (8,9) attached thereto and adjusting means in order to guide the extremities of the guiding means (2) through the guiding openings (7) into the bed plates (8,9) and to lock each time the bed plates with the outer mould consisting of at least of two parts placed in between, using at least one damping means (37).

22. Injection moulding machine according to claim 21, **characterised in that** the machine framework yoke (31) is provided with suitable lifting and transporting means, amongst others for positioning an inner mould in the outer mould (32,32') and for the fixation both with respect to their position towards the central console (11).

23. Mould support block to be used in a mould clamping device according to one of the foregoing claims,
**characterized in that** the mould support block (11) in a side view consists of a central massive core which passes to a block-shaped auxiliary means (12) on both sides in the direction of the short side of the rectangle, in which in a perpendicular way to the block plane a cylindric undercutting (15) is provided and further a clamping surface for moulding parts is provided at the front of the mould support block (11) which is broader than the thickness of the mould support block and the rear side of the mould support block being provided with means (pin, axis, suspension eyes) for movable suspension of the mould support block (11) to a stand (24, see Fig. 3).

## Patentansprüche

1. Die Schließeinheit erzeugt besonders hohe Schließkräfte von über 500 Tonnen ; sie wird insbesondere bei Spritzgussmaschinen eingesetzt, mit denen große Werkstücke erzeugt werden, die starke Schließkräfte erfordern, wobei die Schließeinheit im Prinzip aus folgenden Bauteilen besteht :
a. mindestens zwei Aufspannplatten (8,9), von denen eine fixiert und die andere beweglich ist, auf der der inneren Formteil montiert werden kann; die Aufspannplatte (8,9) verfügt über mindestens zwei Öffnungen für die Führungen (7), durch die die verlängerte Führungsvorrichtung (2) läuft, außerdem verfügt diese Aufspannplatte über verschiedene Einlassöffnungen (10) für Zusatzvorrichtungen (12), die wiederum auf mindestens zwei Formhalterteilen (11) vorliegen, um die extrem starken Schließkräfte auf die Formhalterteile (11) übertragen zu können, wobei die Schließkräfte hauptsächlich über einen direkten Kontakt nur zwischen der Aufspannplatte (8,9) und den Formhalterteilen (11) erzeugt werden.
b. mindestens zwei verlängerten Führungsvorrichtungen (2), in denen jedes Führungselement (2) zwischen den gegeneinander stoßenden Enden mindestens zwei Trennvorrichtungen (3) aufweist, um den beiderseitigen Schließabstand zwischen den Aufspannplatten (8,9) mit Formhalterteilen (11) dazwischen zu begrenzen, falls die Schließkräfte in Längsrichtung der Führungsstangen (2) wirken;
c. mindestens zwei Formhalterteilen (11), die jeweils über die oben genannten zusätzlichen Vorrichtungen (12) verfügen, und auf diesen Formhalterteilen (11) müssen die äußeren Formteile des zu verwendenden Werkzeugs mit Befestigungsvorrichtungen befestigt werden können;
d. einigen Steuerungs- und Druchvorrichtungen (34) für eine innere oder äußere Bewegung jedes der Formhalterteile (11) zum Schließen bzw. Öffnen der Formteile, die an den Formhalterteilen (11) für das fertige Produkt montiert sind.
e. weiteren Steuerungs- und Druckvorrichtungen (22) zum Fixieren der zusätzlichen Vorrichtungen (12) an den Formhalterteilen in den Einlassöffnungen (10), die in den Aufspannplatten (8,9) vorhanden sind;
f. verschiedenen Schließvorrichtungen (37) zum Fixieren einer Führungsvorrichtung (2) hinsichtlich ihrer Position zu einer Aufspannplatte (8,9) und der Position der Aufspannplatte zu den oben genannten Trennvorrichtungen (3);
g. einem Maschinenrahmen, an oder in dem die von a. bis einschließlich f. genannten Maschinenteile so montiert sind, dass eine komplette Spritzgussmaschine vorliegt.

2. Eine Schließvorrichtung gemäß den Anforderungen aus Punkt 1, deren Formhalterteile (11) aufgrund der hohen Schließkräfte aus einem etwas verlängerten und abgeflachten quadratischen Mittelbereich bestehen, der die erforderliche Größe und Masse hat und in Richtung der gegeneinander stoßenden Enden in eine quadratische Zusatzvorrichtung (12) verlängert ist.

3. Eine Schließvorrichtung gemäß den Anforderungen aus Punkt 2, wobei das quadratische Zusatzelement (12) über einen konkaven Hinterschnitt (15) an der Seite verfügt, die der Form gegenüber liegt.

4. Eine Schließvorrichtung gemäß den Anforderungen aus Punkt 3, wobei der konkave Hinterschnitt (15) in einer runden Form ausgeführt ist und als Stützfläche für eine Keilform (16) dient, deren gewünschte schräge Position hinsichtlich des Hinterschnitts (15) zusammen mit der Gegenform (17) in der Einlassöffnung (10) über Befestigungs- und Einstellvorrichtungen (41, 43) eingestellt werden kann.

5. Eine Schließvorrichtung gemäß den Anforderungen aus Punkt 4, wobei die Einlassöffnung (10) für die Zusatzvorrichtungen (12), die sich in der Aufspannplatte (8,9) befindet, über eine entsprechende Gegenform (17) verfügt, die während der Schließbewegung der Aufspannplatte (9) gegen die oben genannte Keilform (16) stößt und auf diese Weise die Schließkraft erzeugt.

6. Eine Schließvorrichtung gemäß den Anforderungen aus Punkt 1, wobei die Führungselemente (2) über ihre gesamte Länge einen runden Querschnitt mit einem über die gesamte Länge gleich großen Durchmesser aufweisen, außer an den Stellen der Trennvorrichtung (3), an denen ein ringförmiger Kranz in der erforderlichen Entfernung von Trennvorrichtung (3), an denen ein ringförmiger Kranz in der erforderlichen Entfernung von den Enden der Führungen (2) vorliegt, und auch nahe daran und in einer Entfernung, die der Stärke der Aufspannplatte (8,9) in Richtung des Endes der Führung (2) entspricht, wobei letztere hier einen geringeren Durchmesser (35, 36) aufweist, und zwar über eine gesamte Länge, die der Höhe der oben genannten Schließvorrichtungen (37) entspricht.

7. Eine Schließvorrichtung gemäß den Anforderungen aus Punkt 1, wobei die Führungen (2) einen runden Querschnitt mit einem über die gesamte Länge gleich großen Durchmesser aufweisen, außer nahe an dem Ende, an dem ein kleinerer Durchmesser (35, 36) vorliegt, der der Höhe der oben genannten Schließvorrichtungen (37) entspricht.

8. Eine Schließvorrichtung gemäß den Anforderungen aus Punkt 6 und 7, wobei die Schließvorrichtungen (37), die ihre Schließfunktion in Bezug auf die Unterschneidung in den Führungen (2) ausführen, in Teile aufgeteilt ist.

9. Art und Weise der Herstellung eines Spritzgussteils unter Anwendung der Schließvorrichtung gemäß allen der oben aufgeführten Punkte 1 bis 8, wobei mindestens die folgenden Vorgänge durchgeführt werden :
- mindestens zwei verlängerte Führungen (2) befinden sich in den Einlassöffnungen von mindestens zwei Aufspannplatten (8, 9) ;
- falls erforderlich, werden die benötigten inneren Formteile an den Aufspannplatten (8,9) montiert;
- verschiedene Formhalterteile (11) werden zwischen den Aufspannplatten (8,9) montiert, auf denen jeweils einzelne Formteile angebracht werden, die alle zusammen die gesamte äußere Form (32, 32') bilden;
- die Zusatzvorrichtungen (12), die an die Formhalter (11) montiert sind, werden bei jeder Bewegung der Aufspannplatten (8,9) nach innen über die Führungen (2) in diesen Aufspannplatten (8,9) geschlossen und erzeugen gleichzeitig anwachsende, hohe Schließkräfte bis zur abschließenden Position der gesamten äußeren Form (32, 32'), die aus einzelnen, sich ergänzenden Formteilen besteht;
- die beiderseitige Position der Aufspannplatten (8,9) zu den Führungen (2) wird in einer nach innen gerichteten Richtung fixiert in Richtung der äußeren Form, nachdem die Schließkräfte (111-111) über verschiedene Schließvorrichtungen (37) verstärkt wurden und auf diese Weise die Schließkraft für die einzelnen Formteile (32, 32') erzeugt wurde, und zwar in einer Richtung (1-1) parallel zu den Führungen (2);
- nachdem die äußere Form auf diese Weise rundum über Sicherungsmechanismen geschlossen wurde, wird diese Kraft vor, während und nach der Beendigung des Spritzvorgans nur über Aktivierung und Deaktivierung von mechanischen Vorrichtungen (8, 9 und 37) aufrechterhalten, ohne dass extrem hoher hydraulischer und/oder pneumatischer Druck auf die Form erforderlich wird.
- Der Spritzvorgang beginnt unter anderem mit dem Aufwärmen der Form und einem anschließenden Füllen der Form, während ein hoher Druch auf diese Form ausgeübt wird ; anschließend werden die Formteile in umgekehrter Reihenfolge geöffnet und das spritzgegossene Werkstück wird herausgenommen.

10. Eine Spritzgussmaschine, am besten eine vertikal angeordnete Spritzgussmaschine, in der eine Schließvorrichtung (1) gemäß den Anforderungen aus den Punkten 1 bis 8 vorhanden ist, wobei der Maschinenrahmen (31) aus einem zentral angeordneten horizontalen Tisch besteht, am besten mit einer polygonalen Form, in dem an beiden Seiten einer Mitellinie durch den Durchmesser des Tisches vier Auflagestellen für jedes Ende, d.h. für jedes nichtrunde Ende der Führungselemente (2) für eine vertikale Positionierung vorliegen ; der Maschinentisch verfügt weiterhin über mindestens zwei, besser noch sechs Tischführungen, die nach außen führen.

11. Eine Spritzgussmaschine gemäß den Anforderungen aus Punkt 10, wobei jeder Formhalter (11) auf einem verlängerten, vertikalen, L-förmigen Ständer (24) ruht, der an seinem unteren Bereich in eine verlängerte horizontale Basis übergeht, die über eine Tischführung (25-30) bewegt wird, um die geteilte äußere Form (32, 32') zu öffnen bzw. zu schließen.

12. Eine Spritzgussmaschine gemäß den Anforderungen aus Punkt 11, wobei der Formhalter (11) an der oberen Seite des Ständers (24) über eine zentrale Achse (Abb. 3-5) an der Rückseite des Formhalters (11) befestigt ist, während der Formhalter (11) zum oberen Teil des Ständers mit vier Bolzen oder Schrauben (Abb. 3) geschlossen ist, die eine seitliche, senkrechte Verlängerung der Ecken des Formhalters (11) bilden, dessen Bolzen oder Schrauben in Bohrlöchern versenkt sind, die wiederum an den entsprechenden Stellen im Ständer (24) vorliegen.

13. Eine Spritzgussmaschine gemäß den Anforderungen aus Punkt 12, wobei die Seite (13) des Formhalters (11), die zur äußeren Form (32, 32') gerichtet ist, von einem flachen und seitlichen, bis direkt an den Formhalter (11) verbreiterten Aufspanntisch (14) zum Einspannen des äußeren Formteils gebildet wird, wobei der Aufspanntisch (13, 14) ebenfalls über mehrere Schließvorrichtungen verfügt.

14. Eine Spritzgussmaschine gemäß den Anforderungen aus den Punkten 10 bis 13, wobei von der Seite aus betrachtet die Ständer- und Basiskonstruktion (24) eine L-Form aufweist, und wobei sich die drei Mittelachsen der Führungsstrecken (26, 29, 30) mit der gemeinsamen Mittelachse von zwei gegenseitig verlängerten Mittelachsen der Führungen (25, 28) in einem Punkt treffen, der sich von dem Schittpunkt der Diagonalen unterschneidet, die zwischen der vertikalen Mittelachse der Führungen (2) liegen, die als Kanten eines Rechtecks angesehen werden, wobei der Schnittpunkt fast die Mittelachse der übrigen Tischführung (27) schneidet.

15. Eine Spritzgussmaschine gemäß den Anforderungen aus den Punkten 10-14, wobei ein doppeltes Verbundmaschinenrahmengestell rittlings zu den beiden Führungen (25, 28) angeordnet ist, die in einer gegenseitig verlängerten Position vorliegen, und wobei die Entfernung zwischen den sich jeweils gegenüberliegenden Beinen des oben beschriebenen Maschinenrahmengestells so bemessen ist, dass beim Öffnen und/oder Schließen der äußeren Form (32, 32') die Ständer (24) mit den darauf montierten Formhaltern beweglich sind, und zwar entweder zwischen den Beinen des Maschinenrahmengestells oder zwischen den Führungen (2) in fixierten Position.

16. Eine Spritzgussmaschine gemäß den Anforderungen aus Punkt 15, wobei sich die Schnittpunkte der vertikalen Mittelachse der Führungen (2) und die Schnittpunkte der vertikalen Säulen des Maschinenrahmengestells in einer horizontalen Ebenen des Basistischs der Spritzgussmaschinen befinden und alle diese Linien die Seiten bzw. Ecken eines imaginären Rechtecks bilden.

17. Eine Spritzgussmaschine gemäß den Anforderungen aus Punkt 16, wobei die Höhe des doppelten förmigen Maschinenrahmengestells über dem Basistisch mindestens der doppelten Höhe einer Aufspannplatte (8,9) entspricht und addiert wird mit der Höhe des oberen Endes eines Formhalters (11), der sich selbst über den Basistisch hinaus verlängert.

18. Die Aufspannplatte, die in einer Schließvorrichtung und/oder einer Spritzgussmaschine gemäß den oben aufgeführten Anforderungen 1 bis 8 und 10 bis 17 zu verwenden ist, muss folgende Eigenschaften aufweisen : jede scheibenförmige Aufspannplatte (8,9) muss die erforderliche Materialstärke haben und aus solidem Material bestehen, über vier Führungsöffnungen (7) für jede der vier Führungsvorrichtungen (2) verfügen, wobei die Mittelpunkte dieser Führungsöffnungen (7) die Ecken eines Rechtecks bilden ; außerdem müssen weitere sechs Einlassöffnungen (10) vorliegen, die einander diametral gegenüberliegen rund um die Mitte der Aufspannplatte (8,9) und entlang des inneren Umfangs der Aufspannplatte (8,9), am besten in rechteckiger Anordnung, wobei sich jede Öffnung an einer Seite befindet, die zur Mitte der Aufspannplatte (8,9) gedreht wird, und mindestens zur Hälfte hiervon, mit einer Gegenform (17), die der Keilform (16) entspricht, auf einer entsprechenden Zusatzvorrichtung (12) auf dem Formhalter (11).

19. Aufspannplatte gemäß den Anforderungen aus Punkt 18, wobei der Keilwinkel ≤ 8° betragen muss.

20. Verlängerte Führungen (2), die in einer Schließvorrichtung (1) und/oder einer Spritzgussmaschine gemäß den oben aufgeführten Anforderungen 1 bis 8 und 10 bis 17 verwendet werden, wobei ein Hinterschnitt an jedem Ende der Führungen (2) vorliegt, so dass eine geteilte Schließvorrichtung (37) eingesetzt werden kann, um auf der Außenseite eine Aufspannplatte (8,9) zu schließen, deren Innenseite einen fixierten Kranz (3) stützt, der an den Führungen befestigt ist.

21. Eine Spritzgussmaschine, am besten eine horizontal angelegte Spritzgussmaschine, die über eine integrierte Schließvorrichtung (1) verfügt und/oder eine Spritzgussmaschine mit einer Aufspannplatte (8,9) und Führungen (2) gemäß den Anforderungen aus den Punkten 1 bis 8 und 10 bis 17, wobei der Maschinenrahmen (31) aus einem verlängerten Maschinentisch mit Tischführungen (25) und einer Mittelkonsole (11) besteht, auf der beidseitig ein Ständer (24) vorhanden ist, der sich entlang von Tischführungen (25) bewegen bzw. verschieben lässt ; Außerdem ist hieran eine Aufspannplatte (8,9) montiert, und es sind Einstellvorrichtungen vorhanden, um die Enden der Führungen (2) durch die Führungsöffnungen (7) in die Aufspannplatten (8,9) zu führen, und um die Aufspannplatten (8,9) mit der äußeren Form zu schließen, bei der mindestens zwei Teile dazwischen gelegt werden, wobei mindestens eine Schließvorrichtung (37) verwendet wird.

22. Eine Spritzgussmaschine gemäß den Anforderungen aus Punkt 21, wobei der Maschinenrahmen (31) über geeignete Vorrichtungen zum Anheben und Transport verfügt, unter anderem für die Positionierung einer inneren Form in die äußere Form (32, 32') und für die Fixierung von beiden hinsichtlich ihrer Position zur Mittelkonsole (11).

23. Ein Formhalter, der in einer Schließvorrichtung verwendet wird, erfüllt eine der oben genannten Anförderungen, wobei der Formhalter (11) von der Seite aus gesehen aus einem massiven Mittelkern besteht, der sich zu einer blockförmigen Zusatzvorrichtung (12) erstreckt, und zwar auf beiden Seiten in Richtung der kurzen Seiten des Rechtecks, in dem senkrecht zur Blockfläche ein zylindischer Hinterschnitt (15) vorliegt und sich außerdem eine Schließfläche für die Formteile an der Vorderseite des Formhalters (11) befindet, die breiter ist als die Dicke des Formhalters ; die Rückseite des Formhalters verfügt über verschiedene Zusatzvorrichtungen (Stift, Achse, Aufhängeösen) für eine bewegliche Aufhängung des Formhalters (11) an einem Ständer (24, siehe Abb. 3).

## Revendications

1. Dispositif de serrage prévu pour générer d'importantes forces de serrage de plus de 500 tonnes, et plus particulièrement destiné à être utilisé dans une machine de moulage par injection pour la fabrication de produits volumineux et nécessitant donc des forces de serrage importantes, ledit dispositif de serrage consistant principalement en une combinaison de :
a. au moins deux plaques d'appui (8, 9), par exemple une plaque fixe et une plaque mobile sur lesquelles des sections de moulage internes peuvent être disposées, les dites plaques d'appui (8,9) étant dotées d'au moins deux ouvertures de guidage (7) destinées au transport d'un moyen de guidage allongé (2) et équipées d'un certain nombre d'ouvertures d'insertion (10) destinées à recevoir des moyens auxiliaires (12) prévus sur au moins deux sections de moulage à blochets d'appui (11) et utilisés pour transmettre des forces de serrage extrêmes aux dites sections de moulage à blochets d'appui (11), les dites forces de serrage étant produites principalement par l'application d'un contact direct uniquement entre les plaques d'appui (8,9) et les sections de moulage à blochets d'appui (11) ;
b. au moins deux moyens de guidage allongés (2), chaque moyen disposant, entre ses extrémités, d'au moins deux moyens d'écartement (3) servant à limiter la distance de fermeture réciproque entre les plaques d'appui (8,9) à sections de moulages avec blochets d'appui (11) insérées, pour le cas où les forces de serrage agiraient longitudinalement par rapport aux moyens de guidage (2) ;
c. au moins deux sections de moulage avec blochets d'appui(11), chaque section disposant des moyens auxiliaires (12) et les sections de moulage externe du moule-produit à inclure pouvant être attachées sur les dits moyens avec des moyens de fixation ;
d. une première série de moyens de contrôle et de pression (34) destinés aux mouvements vers l'intérieur ou l'extérieur de chaque section de moulage avec blochets d'appui (11) en vue de la fermeture ou de l'ouverture des sections de moulage attachées aux sections de moulage avec blochets d'appui (11) pour le produit fini ;
e. une deuxième série de moyens de contrôle et de pression (22) destinée à verrouiller les moyens auxiliaires (12) par rapport aux sections de moulage avec blochets d'appui (11) dans les ouvertures d'insertion (10) prévues dans les plaques d'appui (8,9) ;
f. un certain nombre de moyens de serrage distincts (37) destinés à verrouiller la position d'un moyen de guidage (2) par rapport à une plaque d'appui (8,9) ainsi que la position de cette dernière par rapport aux moyens d'écartement susmentionnés (3) ;
g. un bâti de machine auquel ou dans lequel les composantes de machine mentionnées sous a) jusque f) compris sont intégrées pour former une machine de moulage par injection complète.

2. Dispositif de serrage selon la revendication 1, **caractérisé en ce que** une section de moulage avec blochets d'appui (11) consiste, étant donné les forces de serrage élevées qui agissent, en une section centrale carrée aplatie et quelque peu allongée° possédant une taille et une masse essentielle et se prolongeant vers ses extrémités en un moyen auxiliaire carré (12).

3. Dispositif de serrage selon la revendication 2, **caractérisé en ce que** le moyen auxiliaire carré (12) présente, sur son côté, un enfoncement concave (15) opposé au moule.

4. Dispositif de serrage selon la revendication 3, **caractérisé en ce que** l'enfoncement concave (15) est de forme circulaire et sert de surface de support pour une surface de clavetage (16) pouvant être ajustée dans la position oblique désirée par rapport à l'enfoncement (15), par solidarité avec une surface de contre-clavetage (17) placée dans l'ouverture d'insertion (10) à l'aide de moyens de fixation et d'ajustement (41, 43).

5. Dispositif de serrage selon la revendication 4, **caractérisé en ce que** l'ouverture d'insertion (10) pour les moyens auxiliaires (12) située dans la plaque d'appui (8,9) est dotée d'une surface de contre-clavetage (17) correspondante laquelle percute la surface de clavetage (16) susmentionnée pendant un mouvement de serrage de la plaque d'appui (9), produisant par la même occasion la force de serrage.

6. Dispositif de serrage selon la revendication 1, **caractérisé en ce que** le moyen de guidage (2) a, sur toute sa longueur, une section transversale circulaire de diamètre généralement égal, sauf au niveau du moyen d'écartement (3) systématiquement constitué d'une section à embase annulaire prévue à la distance requise à partir de l'extrémité du moyen de guidage (2) ainsi qu'à proximité et à une distance correspondant à l'épaisseur de la plaque d'appui (8,9), vers l'extrémité du moyen de guidage (2), ce dernier présentant un enfoncement jusqu'à un diamètre inférieur (35, 36) et sur une longueur totale correspondant à la hauteur du moyen de serrage susmentionné (37).

7. Dispositif de serrage selon la revendication 1, **caractérisé en ce que** le moyen de guidage (2) présente une section transversale circulaire de diamètre égal sur toute la longueur sauf près de l'extrémité dudit moyen, où la dite section présente un enfoncement jusqu'à un diamètre inférieur (35, 36) correspondant à la hauteur du moyen de serrage susmentionné (37).

8. Dispositif de serrage selon les revendications 6 et 7, **caractérisé en ce que** le moyen de serrage ayant une fonction de verrouillage par rapport à l'enfoncement du moyen de guidage (2) est divisé en plusieurs parties.

9. Méthode de fabrication d'un produit moulé par injection en utilisant un dispositif de serrage conforme à l'une ou l'autre des revendications 1 à 8 précédentes, et **caractérisée par** au moins les étapes suivantes :
- au moins deux moyens de guidage allongés (2) sont disposés dans les ouvertures d'insertion d'au moins deux plaques d'appui (8,9) ;
- si nécessaire, les sections de moulage interne requises sont attachées aux plaques d'appui (8,9) ;
- un certain nombre de sections de moulage avec blochets d'appui (11) sont placées entre les plaques d'appui (8,9), des sections de moulage distinctes constituant, ensemble, le moule externe complet (32,32') étant attachées sur chaque plaque ;
- les moyens auxiliaires (12) attachés aux blochets d'appui (11) sont chaque fois verrouillés par le mouvement vers l'intérieur des plaques d'appui (8,9) via le moyen de guidage (2) prévu dans les dites plaques (8,9), les dits moyens auxiliaires générant ainsi simultanément des forces de serrage de plus en plus importantes par rapport à la composition finale du moule externe fermé complet (32,32'), constitué de sections de moulage distinctes et complémentaires ;
- la position mutuelle des plaques d'appui (8,9) par rapport aux moyens de guidage (2) est verrouillée vers l'intérieur, en direction du moule externe, après augmentation des forces de serrage (III-III) à l'aide de plusieurs moyens de serrage (37), générant ainsi la force de serrage requise pour les sections de moulage distinctes (32, 32'), dans une direction (I-I) parallèle au moyen de guidage (2) ;
- une fois le moule externe fermé de toutes parts par l'application de forces de verrouillage, les forces de verrouillage supplémentaires sont, avant, pendant et après le moulage par injection, produites exclusivement par l'application et la suppression de serrures mécaniques (8,9 et 37), sans qu'aucune pression hydraulique et/ou pneumatique extrêmement élevée sur le moule ne soit nécessaire.
- La méthode de moulage par injection est amorcée notamment en chauffant le moule puis en le remplissant tout en appliquant une pression élevée, après quoi on procède au déverrouillage des sections de moulage en sens inverse puis au retrait du produit moulé par injection.

10. Machine de moulage par injection, et plus particulièrement machine de moulage par injection disposée verticalement dans laquelle est intégré un dispositif de serrage (11) selon les revendications 1 à 8, et **caractérisée en ce que** le bâti de machine (31) se compose d'une table centrée à base horizontale, plus spécifiquement en forme de polygone, sur laquelle, aux deux extrémités d'une ligne diamétralement centrée située dans le plan de la dite table, quatre réceptions ont été prévues pour chaque extrémité, et plus particulièrement pour chaque extrémité du moyen de guidage (2) à positionner verticalement, la table étant également dotée d'au moins deux, et plus particulièrement six, moyens de guidage de table coulissant vers l'extérieur

11. Machine de moulage par injection selon la revendication 10, **caractérisée en ce que** chaque blochet d'appui (11) est attaché à un support en forme de L (24) qui, dans sa partie inférieure, laisse place à une base horizontale allongée déplaçable le long d'un moyen de guidage de table (25-30) afin d'ouvrir et de fermer le moule externe divisé (32, 32').

12. Machine de moulage par injection selon la revendication 11, **caractérisée en ce que** le blochet d'appui (11) est fixé à la partie supérieure du support (24) à l'aide d'un axe central (fig. 3-5) situé contre la face arrière du blochet d'appui, ledit blochet (11) étant verrouillé par rapport à la partie supérieure du support grâce à quatre épingles ou boulons (Fig. 3) projetés latéralement et perpendiculairement sur les points angulaires du blochet d'appui (11), les dit(e)s épingles ou boulons étant insérés dans des orifices prévus à des positions correspondantes sur le support (24).

13. Machine de moulage par injection selon la revendication 12, **caractérisée en ce que** le côté (13) du blochet d'appui (11) faisant face au moule externe (32, 32') est formé par une table de serrage (14) plane, élargie sur les côtés jusqu'au delà du blochet d'appui (11) et destinée au serrage de la partie externe du moule, la dite table (13, 14) disposant aussi d'un certain nombre de moyens de serrage.

14. Machine de moulage par injection selon les revendications 10-13, **caractérisée en ce que**, vu de côté, l'assemblage support-socle (24) est en forme de L et les intersections de trois axes centraux des voies de guidage (26, 29,30) rencontrent l'axe central commun de deux axes centraux des voies de guidage (25, 28) prolongés mutuellement, en un point distant de l'intersection de lignes diagonales tirées entre les axes centraux verticaux du moyen de guidage (2) situés sur les bords d'un rectangle, la dite intersection formant presque une intersection avec l'axe central du moyen de guidage de table restant (27).

15. Machine de moulage par injection selon les revendications 10-14, **caractérisée en ce que** un double bord de bâti de machine a été disposé à califourchon par rapport aux deux voies de guidage (25, 28) placées dans une position prolongée mutuellement et **en ce que** la distance mutuelle entre les jambes à angles opposés du dit col de bâti est telle que pendant l'ouverture et/ou le verrouillage du moule externe (32, 32'), les supports ainsi que les blochets d'appui attachés aux dits supports peuvent être déplacés entre les jambes du bord de bâti de la machine ou entre la position fixée du moyen de guidage (2).

16. Machine de moulage par injection selon la revendication 15, **caractérisée en ce que**, dans un plan horizontal de la table de soutien de la machine de moulage par injection, les intersections de l'axe central vertical du moyen de guidage et les intersections des colonnes verticales du bord de bâti de la machine sont toutes positionnées sur les côtés ou sur les bords d'un rectangle imaginaire.

17. Machine de moulage par injection selon la revendication 16, **caractérisée en ce que** la hauteur du double bord de bâti en forme de D de la machine par rapport à la table de soutien correspond à au moins le double de la hauteur d'une plaque d'appui (8,9) augmenté de la hauteur de l'extrémité supérieure d'un blochet d'appui (11) qui se projeté au-dessus de la table de soutien.

18. Plaque d'appui destinée à être utilisée dans un dispositif de serrage et/ou une machine de moulage par injection selon une des revendications 1 à 8 et 10 à 17 précédentes, et **caractérisée en ce que** chaque plaque d'appui en forme de disque (8,9) d'une épaisseur matérielle essentielle et constituée en un matériau solide dispose de quatre ouvertures de guidage (7) pour chacun des quatre moyens de guidage (2), les points centraux des dites ouvertures de guidage (7) étant disposés sur les bords d'un rectangle, et dispose aussi de six ouvertures d'insertion (10) disposées diamétralement en face les unes des autres par rapport au centre de la plaque d'appui (8,9) et le long de la circonférence interne de la plaque d'appui (8,9), et présentant plus particulièrement une configuration rectangulaire, chaque ouverture d'insertion étant dotée, sur un côté tourné vers le centre de la plaque d'appui (8,9), au moins à mi-distance de la dite plaque, d'une surface de clavetage (17) solidaire de la surface de clavetage correspondante (16) sur un moyen auxiliaire solidaire (12) attaché au blochet d'appui (11).

19. Plaque d'appui selon la revendication 18, **caractérisée en ce que** l'angle de clavetage est inférieur ou égal à 8°.

20. Moyen de guidage allongé (2) destiné à être utilisé dans un dispositif de serrage (1) et/ou une machine de moulage par injection selon chacune des revendications 1 à 8 et 10 à 17 précédentes, et **caractérisé en ce que** un enfoncement a été prévu près de chaque extrémité du moyen de guidage (2) de telle sorte qu'un moyen de serrage (37) divisé peut être placé dans ledit enfoncement pour fermer une plaque d'appui (8,9) à l'extérieur, la face interne de la dite plaque supportant une embase fixe (3) attachée aux moyens de guidage.

21. Machine de moulage par injection, et plus particulièrement machine de moulage par injection disposée horizontalement, comprenant un dispositif de serrage (1) et/ou une machine de moulage par injection avec plaque d'appui (8,9) et moyens de guidage (2) selon les revendications 1 à 8 et 10 à 17, et **caractérisée en ce que** le bâti de la dite machine est constitué d'une table de soutien horizontale allongée équipée de moyens de guidage (25) et d'une console centrale (11) des deux côtés de laquelle a été prévu un support (24), capable de se déplacer et de coulisser le long de moyens de guidage de table (25), dotée d'une plaque d'appui (8,9) attachée et de moyens d'ajustement destinés à guider les extrémités des moyens de guidage (2) dans les plaques d'appui (8,9) via les ouvertures de guidage (7) et à verrouiller systématiquement les plaques d'appui à moule externe constitué au moins de deux composantes insérées en utilisant au moins un moyen de serrage (37).

22. Machine de moulage par injection selon la revendication 21, **caractérisée en ce que** le bord de bâti de la machine (31) est doté de moyens de levage et de transport adaptés servant notamment à positionner un moule interne dans le moule externe (32, 32') et à fixer la position des dits moules par rapport à la console centrale (11).

23. Blochet d'appui destiné à être utilisé dans un dispositif de serrage selon une des revendications précédentes, et **caractérisé en ce que** le blochet d'appui (11) consiste, vu de côté, en un noyau central massif cédant sa place à un moyen auxiliaire (12) en forme de blochet sur les deux côtés, dans la direction du petit côté du rectangle, dans lequel un enfoncement (15) cylindrique a été prévu, dans une voie perpendiculaire au plan de blochet, et dans lequel une surface de serrage de composantes de moulage a été aménagée sur la surface d'attaque du blochet d'appui (11), la dite surface d'attaque étant plus large que l'épaisseur du blochet d'appui et la face arrière du blochet d'appui disposant de moyens (épingles, axes, yeux porteurs) pour le support et le déplacement du blochet d'appui (11) vers un support (24, voir Fig. 3).
